# EUROPEAN PATENT APPLICATION

(11) **EP 3 179 388 A1**
(43) Date of publication of application: **14.06.2017**
(21) Application number: 16202653.8
(22) Date of filing: 07.12.2016
(51) Int. Cl.: G06F 17/30

(54) **WEB PAGE OPERATION METHOD AND ELECTRONIC DEVICE FOR SUPPORTING THE SAME**

(30) Priority: 08.12.2015 KR 20150173718
(71) Applicant: Samsung Electronics Co., Ltd., Gyeonggi-do 16677 (KR)
(72) Inventor: Lee, Jung Jik, 16700 Suwon-si (KR); Kim, Kyung Tae, 16539 Suwon-si (KR); Choi, Yoon Jeong, 07012 Seoul (KR); Bae, Hye Rim, 16707 Suwon-si (KR); Yoon, Sung Min, 16521 Suwon-si (KR); Jwa, Chang Hyup, 63174 Jeju-si (KR); Lee, Chang Ho, 16532 Suwon-si (KR)
(74) Representative: Nederlandsch Octrooibureau

(57) **Abstract**

An electronic device is provided. The electronic device includes a communication circuit configured to receive a web page, a display configured to output the received web page, and a processor configured to be electronically connected with the communication circuit and the display, wherein the processor is configured to: collect output objects corresponding to a selected area in response to an input signal for selecting the at least part of the entire area of the web page, generate a reconstructed web page based on the collected output objects, and store the generated reconstructed web page.

## Description

### BACKGROUND OF THE INVENTION

### 1. Field of the Invention

The present disclosure relates generally to operating web pages.

### 2. Background of the Invention

Recently, an electronic device may communicate with an external electronic device over a network. For example, the electronic device may access a server over the network, may receive at least part of a web page provided from the server, and may output the at least received part of the web page on its display.

Further, the electronic device may store a web page provided from the server. In this case, the conventional electronic device may store data associated with the entire web page provided from the server without change to store relatively very large data, thus inefficiently using its storage space. Also, the conventional electronic device may change a web page to a portable document format (PDF) file and may store the PDF file, or may store the web page as a captured image. In a conventional method of storing a web page in the form of an image such as a PDF file or a capture image, it is impossible to perform a search associated with contents included in the stored web page. Also, since data stored in the form of an image are relatively larger data than a web page displayed on the display, a storage space is inefficiently operated.

### SUMMARY OF THE INVENTION

Aspects of the present disclosure are to address at least the above-mentioned problems and/or disadvantages and to provide at least the advantages described below. Accordingly, an example aspect of the present disclosure is to provide a web page operation method for storing data corresponding to at least part of the entire area of a web page while maintaining a layout of the web page and using a related function of the web page while maintaining data output attributes of the web page and minimizing and/or reducing a storage space and an electronic device for supporting the same.

In accordance with an example aspect of the present disclosure, an electronic device is provided. The electronic device may include a communication circuit configured to establish a wired or wireless communication channel with the Internet, a display, an input device comprising input circuitry configured to be included on the display or be independent of the display, a non-volatile storage device configured to store a software program for at least web browsing, a processor configured to electrically connect with the communication circuit, the display, the input device, and the non-volatile storage device and a volatile memory configured to electrically connect with the processor, wherein the non-volatile storage device stores instructions which, when executed by the processor, cause the processor to perform operations comprising: outputting a user interface associated with the software program on the display, receiving and parsing first hypertext markup language (HTML) data via the communication circuit in response to a first input received via the input device, and temporarily storing the parsed first HTML data in the volatile memory, generating a first output object tree based on at least part of the stored first HTML data, outputting a web page on the user interface based on at least part of the first output object tree, generating second HTML data including part of the first HTML data based on the at least part of the first output object tree if receiving a second input for storing the web page in the non-volatile storage device from the input device, and storing the second HTML data in the non-volatile storage device

In accordance with another example aspect of the present disclosure, an electronic device is provided. The electronic device may include a communication circuit configured to receive a web page, a display configured to output the received web page, and a processor configured to electronically connect with the communication circuit and the display, wherein the processor is configured to: collect output objects corresponding to a selected area in response to an input signal for selecting the at least part of the entire area of the web page, generate a reconstructed web page based on the collected output objects, and store the generated reconstructed web page.

In accordance with another example aspect of the present disclosure, a web page operation method is provided. The web page operation method may include outputting a user interface on a display of an electronic device, receiving first hypertext markup language (HTML) data via a communication circuit of the electronic device in response to a first input received via an input circuit of the electronic device, parsing the first HTML data and temporarily storing the parsed first HTML data in a volatile memory of the electronic device, generating a first output object tree based on at least part of the parsed first HTML data and the stored first HTML data, outputting a web page on the user interface based on at least part of the first output object tree, generating second HTML data which does not include all of the first HTML data based on the at least part of the first output object tree, if receiving a second input for storing the web page in a non-volatile storage device of the electronic device from the input device, and storing the second HTML data in the non-volatile storage device.

Other aspects and salient features of the disclosure will become apparent to those skilled in the art from the following detailed description, which, taken in conjunction with the annexed drawings, discloses various example embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a drawing illustrating an example web page operation environment according to an example embodiment;
FIG. 2 is a block diagram illustrating an example of an electronic device according to an example embodiment;
FIG. 3 is a flowchart illustrating an example of a web page operation method according to an example embodiment;
FIG. 4A is a drawing illustrating example data conversion of a web page according to an example embodiment;
FIG. 4B is a drawing illustrating an example web page structure according to an example embodiment;
FIG. 5A is a flowchart illustrating an example of a web page storage method according to an example embodiment;
FIG. 5B is a flowchart illustrating another example of a web page storage method according to an example embodiment;
FIG. 6A is a flowchart illustrating an example of a web page storage method using a scalable vector graphics (SVG) format according to an example embodiment;
FIG. 6B is a flowchart illustrating another example of a web page storage method using an SVG format according to an example embodiment;
FIG. 7 is a drawing illustrating an example of a web page conversion stage according to an example embodiment;
FIG. 8 is a drawing illustrating another example of a web page conversion stage according to an example embodiment;
FIG. 9 is a drawing illustrating an example search function operation based on a reconstructed web page according to an example embodiment;
FIG. 10 is a block diagram illustrating an example electronic device operation environment according to an example embodiment;
FIG. 11 is a block diagram illustrating an example configuration of an electronic device according to an example embodiment; and
FIG. 12 is a block diagram illustrating an example configuration of a program module according to various example embodiments.

Throughout the drawings, it should be noted that like reference numbers are used to depict the same or similar elements, features, and structures.

### DETAILED DESCRIPTION OF EMBODIMENTS OF THE PRESENT INVENTION

Various embodiments of the present disclosure may be described with reference to accompanying drawings. Accordingly, those of ordinary skill in the art will recognize that modification, equivalent, and/or alternative on the various embodiments described herein can be variously made without departing from the scope of the present disclosure. With regard to description of drawings, similar components may be marked by similar reference numerals.

In the disclosure disclosed herein, the expressions "have", "may have", "include" and "comprise", or "may include" and "may comprise" used herein indicate existence of corresponding features (e.g., elements such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used herein may refer to various elements of various embodiments, but do not limit the elements. Furthermore, such terms may be used to distinguish one element from another element. For example, "a first user device" and "a second user device" may indicate different user devices regardless of the order or priority thereof For example, "a first user device" and "a second user device" indicate different user devices.

It will be understood that when an element (e.g., a first element) is referred to as being "(operatively or communicatively) coupled with/to" or "connected to" another element (e.g., a second element), it may be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used herein may be used as, for example, the expression "suitable for", "having the capacity to", "designed to", "adapted to", "made to", or "capable of". The term "configured to" must not mean only "specifically designed to" in hardware. Instead, the expression "a device configured to" may mean that the device is "capable of" operating together with another device or other components. CPU, for example, a "processor configured to perform A, B, and C" may refer to a dedicated processor (e.g., an embedded processor) for performing a corresponding operation or a generic-purpose processor (e.g., a central processing unit (CPU) or an application processor) which may perform corresponding operations by executing one or more software programs which are stored in a memory device.

Terms used in the present disclosure are used to describe various example embodiments and are not intended to limit the scope of the present disclosure. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal sense unless expressly so defined herein in various embodiments of the present disclosure. In some cases, even if terms are terms which are defined in the disclosure, they may not be interpreted to exclude embodiments of the present disclosure.

An electronic device according to various example embodiments of the present disclosure may include at least one of smartphones, tablet personal computers (PCs), mobile phones, video telephones, e-book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, wearable devices (e.g., head-mounted-devices (HMDs), such as electronic glasses), an electronic apparel, electronic bracelets, electronic necklaces, electronic appcessories, electronic tattoos, smart watches, or the like, but is not limited thereto.

According to another example embodiment, the electronic devices may be home appliances. The home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSyncTM, Apple TVTM, or Google TVTM), game consoles (e.g., XboxTM or PlayStationTM), electronic dictionaries, electronic keys, camcorders, electronic picture frames, or the like, but is not limited thereto.

According to another example embodiment, the electronic device may include at least one of medical devices (e.g., various portable medical measurement devices (e.g., a blood glucose monitoring device, a heartbeat measuring device, a blood pressure measuring device, a body temperature measuring device, and the like)), a magnetic resonance angiography (MRA), a magnetic resonance imaging (MRI), a computed tomography (CT), scanners, and ultrasonic devices), navigation devices, global positioning system (GPS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs), or internet of things (e.g., light bulbs, various sensors, electric or gas meters, sprinkler devices, fire alarms, thermostats, street lamps, toasters, exercise equipment, hot water tanks, heaters, boilers, and the like), or the like, but is not limited thereto.

According to another example embodiment, the electronic devices may include at least one of parts of furniture or buildings/structures, electronic boards, electronic signature receiving devices, projectors, or various measuring instruments (e.g., water meters, electricity meters, gas meters, or wave meters, and the like), or the like, but is not limited thereto. In the various example embodiments, the electronic device may be one of the above-described various devices or a combination thereof. An electronic device according to an example embodiment may be a flexible device. Furthermore, an electronic device according to an example embodiment may not be limited to the above-described electronic devices and may include other electronic devices and new electronic devices according to the development of technologies.

Hereinafter, an electronic device according to the various example embodiments may be described with reference to the accompanying drawings. The term "user" used herein may refer to a person who uses an electronic device or may refer to a device (e.g., an artificial intelligence electronic device) that uses an electronic device.

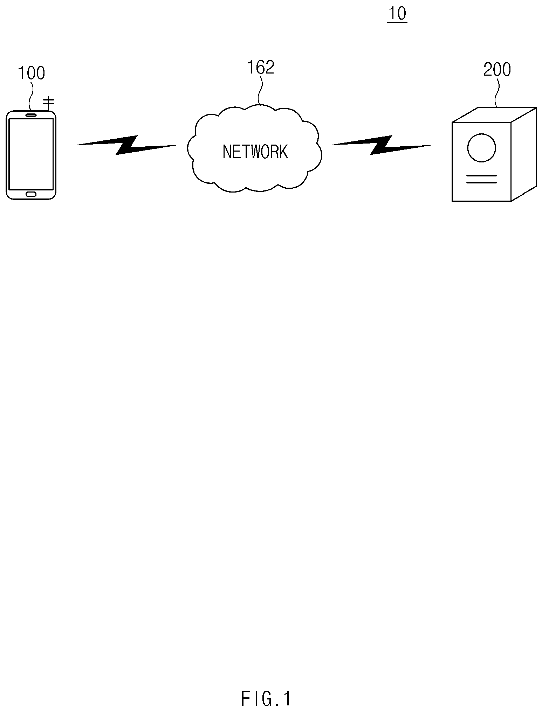

FIG. 1 is a drawing illustrating an example web page operation environment according to an example embodiment.

Referring to FIG. 1, a web page operation environment 10 according to an example embodiment may include an electronic device 100, a server 200, and a network 162. The electronic device 100 and the server 200 may establish a communication channel over the network 162.

The electronic device 100 may access the server 200 over the network 162. The electronic device 100 may receive a web page (e.g., a hypertext markup language (HTML) web page) from the server 200. The electronic device 100 may store the received web page in its memory and may output at least part of the web page on its display. According to an example embodiment, the electronic device 100 may store an HTML web page provided from the server 200 in a volatile memory among various memories included therein. The electronic device 100 may parse data to be output on the display in the HTML web page stored in the volatile memory and may output the parsed data on the display. According to an example embodiment, the electronic device 100 may store at least part of a web page displayed on the display or at least one output object (e.g., at least one render object) associated with the at least part of the web page displayed on the display. The electronic device 100 may reconstruct a web page having the same or similar form (e.g., an HTML document form) to that of a web page which is currently being output on the display, a data size of which is relatively reduced, based on output objects corresponding to an area selected during an operation of storing output objects. The electronic device 100 may store the reconstructed web page in the memory (e.g., a non-volatile storage device).

According to various example embodiments, the electronic device 100 may search for a reconstructed web page in response to a search input event. The electronic device 100 may perform an operation of parsing data of the reconstructed web page and an operation of displaying the reconstructed web page on the display based on the parsed data. The reconstructed web page may be a web page according to a specified document form (e.g., a hypertext markup language (HTML), dynamic HTML (DHTML), hypertext preprocessor (PHP), or extensible markup language (XML) document form). The reconstructed web page displayed on the display may have, for example, the same type (e.g., the same document form) as that of a web page output on the display before being stored and may be a web page including relatively less data. According to an example embodiment, if the web page is an HTML document, the reconstructed web page may be an HTML document, data of which is relatively more reduced than an original web page. Hereinafter, an example embodiment will be illustrated as a web page is an HTML document. A description will be given of technologies of storing a reconstructed web page associated with a specified area of a web page and technologies of operating the reconstructed web page.

According to an example embodiment, the electronic device 100 may selectively store output objects associated with at least part of a specified area of the web page displayed on the display or with the specified area. On the other hand, the electronic device 100 may store only the output objects associated with the specified area to minimize data to be stored. The electronic device 100 may separately store and manage history of stored reconstructed web pages. The electronic device 100 may perform a search function and a data analysis function (e.g., a user taste analysis function) based on a stored reconstructed web page.

According to an example embodiment, the server 200 may establish a communication channel with the electronic device 100 over the network 162. If the electronic device 100 accesses the server 200, the server 200 may provide a specified web page to the electronic device 100. For example, the server 200 may provide a web page to the electronic device 100 based on a browser executed in the electronic device 100. The web page provided from the server 200 may be, for example, a web page of an HTML document form. The web page sent to the electronic device 100 may include specified data set by the server 200. For example, the web page may include information which is not displayed on the display as well as data displayed on the display of the electronic device 100.

An electronic device according to an example embodiment may include a memory configured to store a reconstructed web page which is temporarily stored for a web page and a processor configured to store a specified area of a displayed web page when a request to store the specified area of the web page displayed on a display of the electronic device is generated to store a web page reconstructed to have the same document form as that of the displayed web page.

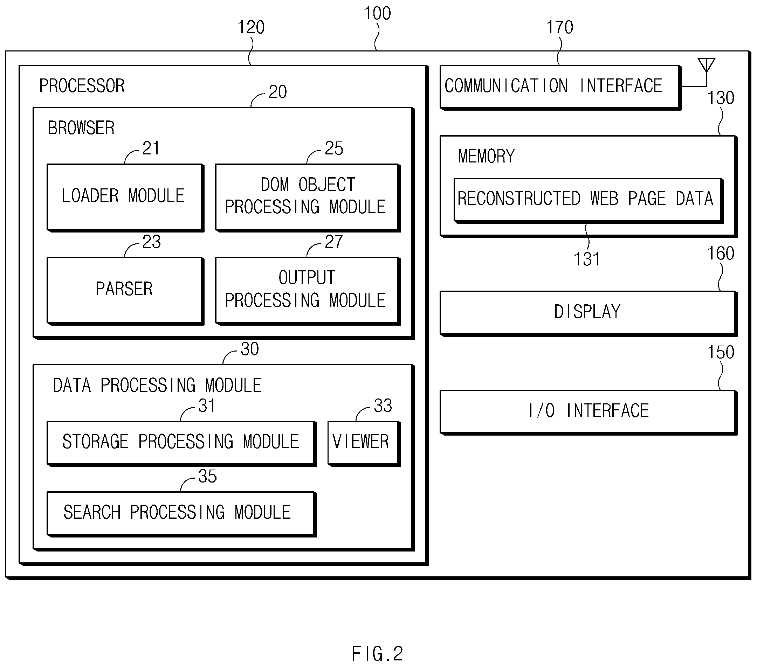

FIG. 2 is a block diagram illustrating an example of an electronic device according to an example embodiment.

Referring to FIG. 2, an electronic device 100 may include a processor 120 (e.g., at least one of an application processor (AP) or a communication processor (CP)), a memory 130, an input/output (I/O) interface (e.g., including input/output circuitry) 150 (or an input device, e.g., a user input device), a display 160, or a communication interface 170 (e.g., a communication circuit).

According to an embodiment, the electronic device 170 may be implemented as, for example, a portable electronic device. The portable electronic device may be implemented as, for example, a mobile phone, a smartphone, a tablet personal computer (PC), a personal digital assistant (PDA), an enterprise digital assistant (EDA), a digital still camera, a digital video camera, a portable multimedia player (PMP), a personal navigation device or portable navigation device (PND), a handheld game console, a mobile Internet device (MID), an Internet tablet, or an electronic-book (e-book) terminal, or the like, but is not limited thereto.

According to an example embodiment, the processor 120 may control an overall operation of the electronic device 100. According to an example embodiment, the processor 120 may be implemented in various ways, such as, for example, and without limitation, as an integrated circuit (IC), a system on chip (SoC), or a mobile AP. The processor 120 may implement at least one module associated with processing a web page. For example, the processor 120 may implement a browser 20, a data processing module 30, and the like using a command or a program code stored in the memory 130. In the present disclosure, it may be described that the processor 120 includes various modules for processing various functions. Unless referring to separate independent hardware, such description may be understood as the processor 120 implements various modules which may be embedded in the memory 130 or the processor 120 or be loaded from another storage device. If a request to store a specified area of a web page received using the browser 20 is generated, the processor 120 may reconstruct the web page based on output objects associated with the specified area (or a selected area or the entire rendered area). The processor 120 may store the reconstructed web page in the memory 130 automatically or in response to an input event.

According to an example embodiment, the browser 20 may include a loader module 21, a parser 23, a document object module (DOM) object processing module 25, and an output processing module 27. If the electronic device 100 accesses a server 200 of FIG. 1, the loader module 21 may receive information associated with a web page from the server 200. The loader module 21 may store the received information associated with the web page in the memory 130 (e.g., a volatile memory). According to an example embodiment, the web page received by the loader module 21 may be an HTML document and may include various image data, various text data, and display control information associated with the image data and the text data. The HTML document may refer, for example, to a file associated with a web page, for example, a file having the extension '.html', an image file, a cascading style sheet (CSS) file having the extension '.css', and a java script (JS) file having the extension '.js', for implementing a web page corresponding to the HTML document, rather than simply mean the file having the extension '.html'. The loader module 21 may load files associated with a web page stored in the memory 130. It will be understood that the loader module 21 may be realized as a command or program code.

According to an example embodiment, the parser 23 may parse a source stream from files associated with a web page loaded by the loader module 21. For example, the parser 23 may parse data associated with generating a DOM object from an HTML source associated with a web page stored in a volatile memory of the electronic device 100 and may generate an object to configure (or generate) a DOM tree using the parsed data. The parser 23 may provide the generated object to the DOM object processing module 25. A DOM may be a form in which elements included in an HTML are represented as a structured object model. A DOM application programming interface (API) may provide a structural representation form of an HTML document and an XML document and may define access of the structural representation form based on script operation. It will be understood that the parser 23 may be realized as a command or program code.

According to an example embodiment, the DOM object processing module 25 may generate a DOM tree based on objects transmitted from the parser 23. In this operation, the DOM object processing module 25 may generate objects included in an HTML, an XML, or the like as a DOM tree based on the DOM API. It will be understood that the DOM object processing module 25 may be realized as a command or program code.

According to an example embodiment, the output processing module 27 may extract output objects associated with portions to be output on the display 160 from DOM objects included in a DOM tree. The output processing module 27 may configure (or generate) an output object tree (or an output tree or a rendering tree) based on the extracted output objects. The output processing module 27 may configure a layout of output objects which may be drawn on the display 160, based on the output object tree. The output processing module 27 may output at least part of the layout on the display 160 based on a specified setting. It will be understood that the output processing module 27 may be realized as a command or program code.

According to an example embodiment, if an input event associated with storing a specified area is received, the data processing module 30 may collect at least one output object for the specified area (or a selected area) in response to the input event. The data processing module 30 may reconstruct a web page based on the collected output objects. Also, the data processing module 30 may store at least one reconstructed web page 131 (e.g., second HTML data reconstructed based on part of first HTML data displayed on the display 160) in the memory 130 (e.g., a non-volatile storage device). The data processing module 30 may support a search and analysis function for reconstructed web pages. In this regard, the data processing module 30 may include a storage processing module 31, a viewer 33, or a search processing module 35. It will be understood that the data processing module 30 may be realized, in part, as a command or program code, and that the various modules included in the data processing module 30, such as, for example, a storage processing module 31, a viewer 33 and a search processing module 35 may likewise be realized as a command or program code.

According to an example embodiment, if an input event for a request to store a specified area is generated from the I/O interface 150 (or the input device), the storage processing module 31 may collect an output object associated with the specified area (or a selection area based on the input event). The output object may include display information associated with the specified area. For example, the display information may include location information indicating whether an output object is output on any location of the display 160, style information including a color, form, or size of the output object and a type (e.g., an image, text, a link, or the like) of the output object, and the like. Also, the display information may include information about contents (e.g., text or an image) of the output object. The storage processing module 31 may reconstruct a web page based on display information of collected output objects. For example, the storage processing module 31 may generate a new HTML web page based on the display information of the collected output objects.

According to various example embodiments, the storage processing module 31 may perform an output (e.g., drawing or recording) through a backend of output objects based on a graphic library provided from the browser 20. The storage processing module 31 may change recorded data into an SVG format and may reconstruct a web page based on the changed the SVG format data. The SVG format may include a format which represents an SML-based two-dimensional (2D) vector graphic. The storage processing module 31 may represent a graphic object with a tag format in an SVG format conversion operation. According to an example embodiment, the storage processing module 31 may finally convert SVG format data into an HTML web page and may store the HTML web page in the memory 130 (e.g., the non-volatile storage device). In this operation, the storage processing module 31 may generate a new HTML web page based on the converted SVG format data and display location information of an output object.

According to various example embodiments, the storage processing module 31 may optimize a reconstructed web page 131. For example, the storage processing module 31 may search for an unnecessary blank in the reconstructed web page 131 (e.g., a space on which separate information is not displayed or a space which is not associated with an output object) and may delete the found blank. Also, the storage processing module 31 may change link information (e.g., a link uniform resource locator (URL)) of an output object to a specified size. According to an example embodiment, if an image associated with an output object of a specified area needs to be stored in the memory 130 (e.g., the non-volatile storage device), the storage processing module 31 may rewrite link information using a storage path of the memory 130 and a file name changed according to any rule or a specified rule. The storage processing module 31 may store the reconstructed web page 31 to which the rewritten link information is applied in the memory 130.

According to an example embodiment, the viewer 33 may output the reconstructed web page 131 stored in the memory 130 on the display 160 based on an input event input from a user input device (e.g., the I/O interface 150). In this operation, the viewer 33 may generate a DOM tree structure and an output object tree structure with respect to output objects included in the reconstructed web page 131. The viewer 33 may use the memory 130 (e.g., the volatile memory) in connection with generating the DOM tree and the output object tree. The viewer 33 may select objects configured to be output on the display 160 in the output object tree structure and may output the selected objects on the display 160. The reconstructed web page 131 output by the viewer 33 may be a new HTML web page (or an HTML web page reconstructed with part of data of an initial web page).

According to an example embodiment, the search processing module 35 may search for information corresponding to a keyword input via an input device of the electronic device 100 and may output the found result on the display 160. According to an example embodiment, the search processing module 35 may search for information corresponding to an input keyword from the reconstructed web page 131. For example, the search processing module 35 may match the keyword with text information included in the reconstructed web page 131 and may search for at least one of text corresponding to the matched result, an output object including the text, or a reconstructed web page including the text. The search processing module 35 may output the at least found one of the text, the output object, or the reconstructed web page as a search result on the display 160. In connection with comparing text of a reconstructed web page, the search processing module 35 may load text into a volatile memory of the memory 130, may compare the text with a keyword, and may release the memory used to load and compare the text. According to an example embodiment, the memory 130 may store at least one program associated with operating the electronic device 100 and data associated with operating the program. According to an embodiment, the memory 130 may store an operating system (OS) of the electronic device 100. The memory 130 may store a web page provided from the server 200. The memory 130 may store a browser program. The memory 130 may store the reconstructed web page 131 stored as part of a web page in response to a specified input. As described above, the reconstructed web page 131 may be an HTML web page. The memory 130 may store the at least one reconstructed web page 131 generated from at least one web page. According to an example embodiment, the memory 130 may include a volatile memory and a non-volatile storage device. The volatile memory may temporarily store a web page (e.g., first HTML data) provided from the server 200. The volatile memory may be used to temporarily store data while the parser 23 parses data to configure (or generate) a DOM tree. The volatile memory may temporarily store an output object tree generated based on a DOM tree. The non-volatile storage device may store, for example, a reconstructed web page generated in connection with storing a specified area of a web page.

According to an example embodiment, the display 160 may be implemented with a thin film transistor-liquid crystal display (TFT-LCD) panel, a light emitting diode (LED) panel, an organic LED (OLED) panel, an active matrix OLED (AMOLED) panel, a flexible panel, or the like, but is not limited thereto. The display 160 may output an execution screen based on executing a specified application. According to an example embodiment, the display 160 may output a screen associated with operating a web page. For example, the display 160 may output part of an area of a web page provided from the server 200. According to various example embodiments, the display 160 may output the reconstructed web page 131 stored in the memory 130. The display 160 may output a search screen, a search result screen, and the like, but is not limited thereto.

According to an embodiment, the communication interface 170 may include various communication circuitry, such as, for example, and without limitation, at least one module which supports establishing a communication channel of the electronic device 100. The communication interface 170 may support at least one communication mode. According to various example embodiments, the communication interface 170 may establish, for example, a communication channel with the server 200 based on a network 162 of FIG. 1. The communication interface 170 may receive information (e.g., a web page) associated with operating a web page from the server 200.

According to an example embodiment, the I/O interface 150 may include various I/O circuitry configured to provide an interface which transmits a command or data, input from a user of the electronic device 100 or another external device, to another component (or other components) of the electronic device 100. The I/O interface 150 may include various I/O circuitry, such as, for example, and without limitation, at least one physical button, at least one touch button, a touch pad, a touch screen, or the like. The I/O interface 150 may include an input circuit such as an electronic pen. The I/O interface 150 may receive, for example, an input signal associated with operating the browser 20, an input signal associated with controlling a display state of a web page, an input signal for selecting part of an area of a web page, an input signal for requesting to store the selected part of the area, and the like in response to a user input. According to various example embodiments, the I/O interface 150 may receive an input, e.g., a user input, associated with a keyword. The selected part of the area may be, for example, a closed curve area of an area drawn using a finger or an electronic pen of the user on the display 160. The selected part of the area may be an area displayed on the display 160 in the entire area of the web page. According to various example embodiments, if the I/O interface 150 may send an input signal corresponding to capturing an image to the processor 120, the processor 120 may generate part of the entire area of a web page currently displayed on a screen as a reconstructed web page and may store the reconstructed web page in the memory 130.

According to an example embodiment, the I/O interface 150 may include an audio device including audio circuitry which may collect or output an audio signal. According to an example embodiment, the audio device may output an effect sound or a specified voice guide message associated with receiving a web page, displaying the web page, storing a specified area of the web page, or outputting the stored reconstructed web page 131, in response to control of the processor 120. The outputting of the effect sound or the guide message may be omitted based on settings.

According to an example embodiment of the present disclosure, an electronic device may include a communication circuit configured to establish a wired or wireless communication channel with the Internet, a display, an input device configured to be included on the display or be independent of the display, a non-volatile storage device configured to store a software program for at least web browsing, a processor configured to electrically connect with the communication circuit, the display, the input device, and the non-volatile storage device, and a volatile memory configured to electrically connect with the processor, wherein the non-volatile storage device stores instructions executed by the processor, the instructions configured to output a user interface associated with the software program on the display, receive and parse first hypertext markup language (HTML) data via the communication circuit in response to a first input received via the input device, and temporarily store the parsed first HTML data in the volatile memory, generate a first output object tree based on at least part of the stored first HTML data, output a web page on the user interface based on at least part of the first output object tree, generate second HTML data including part of the first HTML data based on the at least part of the first output object tree if receiving a second user input for storing the web page in the non-volatile storage device from the user input device, and store the second HTML data in the non-volatile storage device.

According to various example embodiments, the instructions executed by the processor are configured to receive a third input for reproducing the stored second HTML data from the non-volatile storage device from the input device, parse the second HTML data and temporarily store the parsed second HTML data in the volatile memory, generate a second output object tree based on at least part of the parsed or stored second HTML data, and display the web page on the user interface based on at least part of the second output object tree.

According to an example embodiment of the present disclosure, an electronic device may include a communication circuit configured to receive a web page, a display configured to output the received web page, and a processor configured to electronically connect with the communication circuit and the display, wherein the processor may be configured to collect output objects corresponding to a selected area in response to an input signal for selecting the at least part of the entire area of the web page, generate a reconstructed web page based on the collected output objects, and store the generated reconstructed web page.

According to various example embodiments, the processor may be configured to configure a document object module (DOM) tree from HTML data of the web page, configure an output object tree of objects output on the display based on the DOM tree, generate HTML data for objects corresponding to the selected area from the output object tree, and store the generated HTML data.

According to various example embodiments, the processor may be configured to collect display information of objects which are currently being displayed on the display among the output objects, and generate and store an HTML reconstructed web page using output objects of the selected area based on the display information.

According to various example embodiments, the processor may be configured to receive an input event on an area from the display, collect an output object, at least part of which is included in at least partial area drawn by the input event, and display information of the output object, and generate and store an HTML reconstructed web page using the output objects based on the output object and the display information.

According to various example embodiments, the processor may be configured to receive a screen capture input event, collect an output object displayed on at least part of the display and display information of the output object, and generate and store an HTML reconstructed web page using the output objects based on the output object and the display information.

According to various example embodiments, the processor may be configured to configure (or generate) a DOM tree from an HTML data of the web page, configure (or generate) an output object tree of objects to be output on the display based on the DOM tree, collect part of at least one output object corresponding to the at least part of the entire area in the output object tree, encode the collected part of the at least one output object, change the encoded data to scalable vector graphics (SVG) format data, and generate and store an HTML reconstructed web page based on the changed SVG format data.

According to various example embodiments, the processor may be configured to remove a specified blank or any blank included in the reconstructed web page, or wherein the processor may be configured to adjust a size of each of the output objects in response to attributes of the display.

According to various example embodiments, the processor may be configured to output the reconstructed web page on the display based on a document form, if an input event associated with outputting the stored reconstructed web page is received.

According to various example embodiments, the processor may be configured to detect a reconstructed web page including information corresponding to a received keyword, if the keyword is received, and output the detected reconstructed web page.

According to various example embodiments, the processor may be configured to detect text corresponding to the keyword among text included in the reconstructed web page and output text including the keyword.

According to various example embodiments, the processor may be configured to change a link path of contents information corresponding to link information included in the output objects to a path of a memory which stores the contents information and applying the changed path information to link information of the reconstructed web page.

According to various example embodiments, the processor may be configured to change name or title information of link information included in the output objects to a size or less.

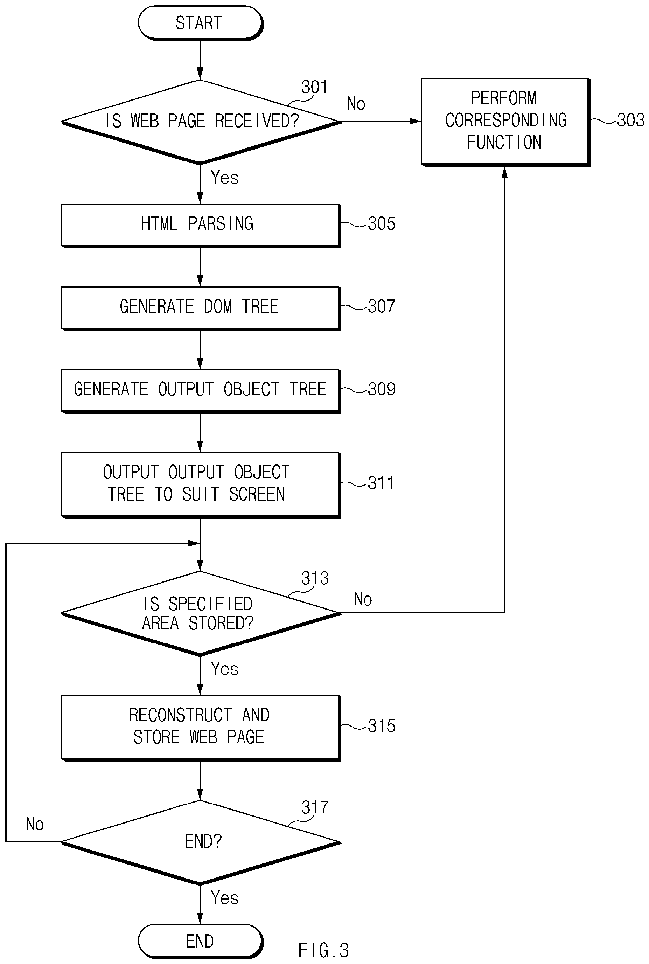

FIG. 3 is a flowchart illustrating an example of a web page operation method according to an example embodiment.

Referring to FIG. 3, in connection with the web page operation method, in operation 301, an electronic device 100 of FIG. 2 or a processor 120 of the electronic device 100 may determine whether a web page is received. The processor 120 may provide an icon, a menu item, or the like associated with activating a browser 20 of FIG. 2. The processor 120 may activate the browser 20 based on a specified setting. The processor 120 may access a server 200 of FIG. 2 based on the browser 20 and may receive a web page from the server 200. If an input event associated with receiving a separate web page is not generated, in operation 303, the processor 120 may operate a specified function of the electronic device 100. For example, the processor 120 may maintain a previous application execution state, may maintain a sleep state (e.g., a state where a display 160 of FIG. 2 is turned off), or may execute a specified function in response to a type of a generated input event.

If the web page is received, in operation 305, the processor 120 may store the received web page in a volatile memory (e.g., a random access memory (RAM)) and may perform HTML parsing. In operation 307, the processor 120 may generate a DOM tree based on a file extracted by the HTML parsing. In operation 309, the processor 120 may generate an output object tree based on the DOM tree. The processor 120 may extract output objects configured to be displayed from the DOM tree and may generate an output object tree which connects the extracted output objects.

In operation 311, the processor 120 may output the output object tree on a screen of the electronic device 100. For example, the processor 120 may verify a size, resolution, or the like of the display 160 of the electronic device 100 and may output the output object tree to suit the corresponding display 160.

In operation 313, the processor 120 may determine whether an event associated with storing a specified area is generated. For example, the processor 120 may receive an event for requesting to store a screen currently displayed on the display 160, based on an input or based on executing a specified application. The processor 120 may receive an input event for selecting part of the entire area of the display 160 and an event for requesting to store the selected part of the entire area. The processor 120 may receive an input event for specifying an area (e.g., part of the entire area or the entire area) of the display 160 as an event associated with the stored specified area.

If the event associated with storing the specified area is not generated, the processor 120 may branch to operation 303 to perform a function based on a type of an input event. For example, the processor 120 may scroll a web page in response to the type of the input event or may execute a link included in the web page.

If the event associated with storing the specified area is generated, in operation 315, the processor 120 may reconstruct a web page and may store the reconstructed web page. The processor 120 may verify a range of storing a specified area. For example, the processor 120 may determine whether the entire area of the currently displayed screen is determined as a specified area or whether part of the entire area is determined as a specified area by analyzing an input event. If the specified area is determined, the processor 120 may collect information of output objects associated with the determined specified area. For example, the processor 120 may collect information associated with output objects output on a current screen in connection with storing the entire screen. The processor 120 may collect at least one output object information included in a specified area of a screen. The processor 120 may collect information of an output object arranged on a boundary area (e.g., an output object displayed on only part of the entire area of a screen or an output object over a boundary of a specified area). The at least one output object information may include at least part of contents information (e.g., text, an image, or the like) of an output object, color information of the output object, or display information of the output object (e.g., a display location on the display 160 or a location relationship with other output objects).

If the output object information is collected, the processor 120 may reconstruct an HTML document based on the collected output object information, or may change an HTML document to an SVG format to reconstruct the HTML document based on the SVG format. If the HTML document is reconstructed, the processor 120 may store the reconstructed HTML document in a specified area of the memory 130.

In operation 317, if an event associated with ending the operation of the web page is generated, the processor 120 may end the operation of the web page. For example, the processor 120 may stop outputting the web page and may return to a previous state (e.g., an application execution state before the web page is output, a sleep state, or a home screen state). If the event associated with ending the operation of the web page is not generated, the processor 120 may branch to operation 313 to perform the operation from operation 313.

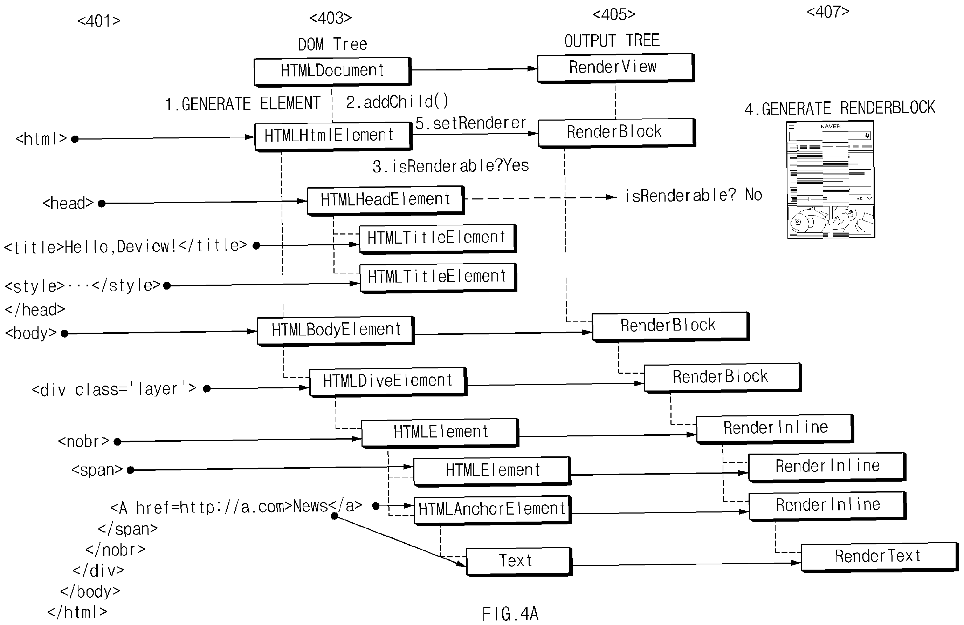

FIG. 4A is a drawing illustrating data conversion of a web page according to an example embodiment.

Referring to FIG. 4A, the data conversion of the web page applied in various example embodiments may have an HTML source state 401, a DOM tree state 403, and an output object tree state 405.

According to an example embodiment, if an electronic device 100 of FIG. 2 receives a web page from a server 200 of FIG. 1, a processor 120 of FIG. 2 may parse an HTML source from the received web page. In state 401, the parsed HTML source may have a tag form. Data (e.g., text or data) linked to the HTML source may be stored in the server 200 or may be stored in a memory 130 (or a volatile memory) of the electronic device 100.

In state 403, the processor 120 may configure (or generate) a DOM tree based on tags parsed from the HTML source. Each of information of the DOM tree may correspond to a value of each of source files of the HTML source.

In state 405, the processor 120 may generate an output object tree based on the DOM tree. The output object tree may be a tree generated based on objects to be output on a display 160 of FIG. 2 among objects included in the DOM tree.

In state 407, the processor 120 may generate a screen to be output on the display 160, based on the output object tree.

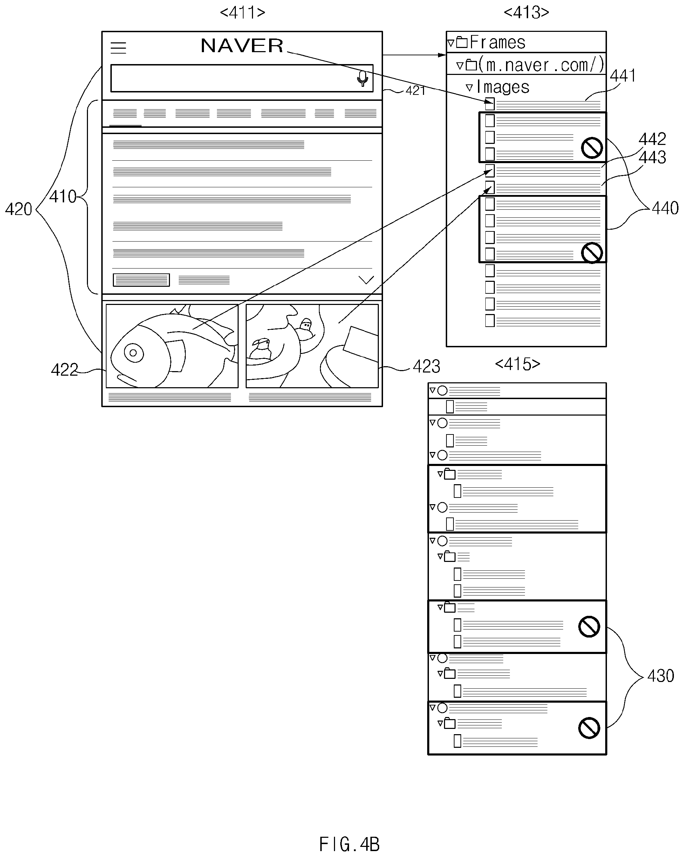

FIG. 4B is a drawing illustrating a web page structure according to an example embodiment.

Referring to FIG. 4B, if receiving a web page (e.g., first HTML data) from a server 200 of FIG. 1, in state 411, an electronic device 100 of FIG. 2 may output the received web page on a display 160 of FIG. 2. As illustrated in FIG. 4B, the web page output on the display 160 may include a text area 410 and an image area 420. The image area 420 may include, for example, three image areas 421, 422, 423.

Information associated with the web page received by the electronic device 100 may include image files in state 413 and various files in state 415. For example, the information associated with the web page may include images 440 which are not displayed on the display 160 and CSS/JS files 430 as well as image data 441, 442, 443 respectively corresponding to the three image areas 421 to 423.

According to an example embodiment, in an HTML reconstruction operation, a processor 120 of FIG. 2 may remove the images 440 which are not displayed on the display 160 and the CSS/JS files 430. If storing at least part of a web page associated with a specified area, the processor 120 may store a reconstructed web page including only information displayed on the display 160 without including the images 440 which are not displayed on the display 160 and the CSS/JS files 430. For example, if receiving a request to store state 411, the processor 120 may store only an image (e.g., the image data 441 to 443) used to display a screen in state 411 on an image list in state 413. The processor 120 may store only a file used to display the screen in state 411 on a list of received CSS/JS files in state 415.

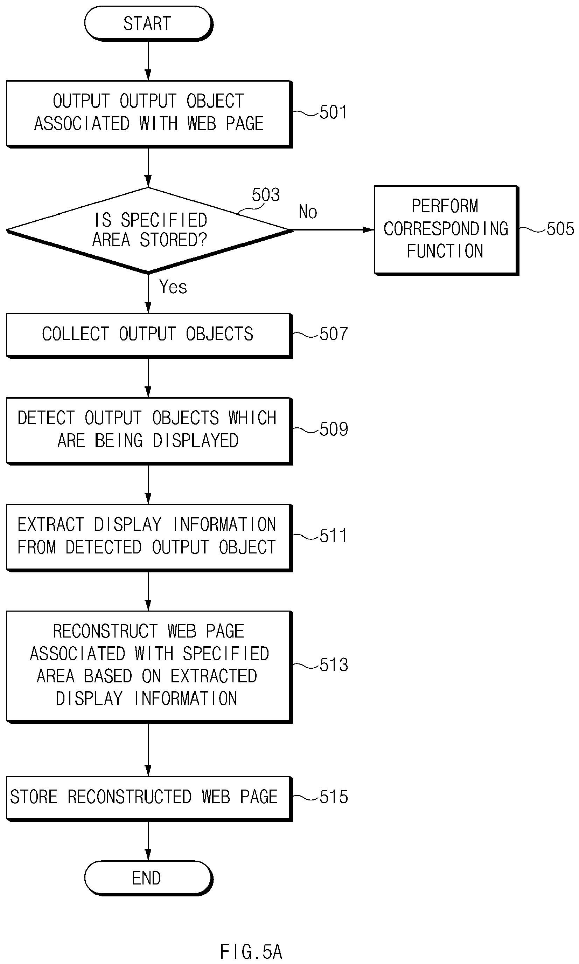

FIG. 5A is a flowchart illustrating an example of a web page storage method according to an example embodiment.

Referring to FIG. 5A, in connection with the web page storage method, in operation 501, a processor 120 of FIG. 2 may output an output object associated with a web page. For example, after an electronic device 200 of FIG. 2 accesses a server 200 of FIG. 1, the processor 120 may output a web page provided from the server 200 on a display 160 of FIG. 2. The processor 120 may generate a DOM tree from information (e.g., an HTML source) associated with a web page provided from the server 200 and may generate and operate an output object tree from the DOM tree.

If an input event is generated, in operation 503, the processor 120 may determine whether the generated input event is an input event associated with storing a web page. If the generated input event is an input event which is not associated with storing the web page, in operation 505, the processor 120 may execute a function corresponding to the input event. For example, the processor 120 may output another web page after accessing another server or may perform a scroll function of a currently output web page, based on a type of the input event.

If the generated input event is the input event associated with storing the web page, in operation 507, the processor 120 may collect output objects. For example, the processor 120 may collect output objects included in an output object tree. In operation 509, the processor 120 may detect output objects which are being displayed. For example, if a request to capture and store the entire screen of the display 160 is received (or if an input event associated with capturing and storing the entire screen is generated), the processor 120 may collect output objects which are currently being output on the display 160, which are at least some of the output objects included in the output object tree. The processor 120 may collect output objects included in an area specified by a user of the electronic device 100.

In operation 511, the processor 120 may extract display information of the detected output object. For example, the processor 120 may extract display location information on the display 160 from the detected output objects. The processor 120 may extract information about a color, a size, or the like of the detected output object.

In operation 513, the processor 120 may reconstruct a web page associated with a specified area based on the extracted display information. For example, the processor 120 may reconstruct a size of each of the extracted output objects to suit a screen of the display 160. The processor 120 may extract style information of an output object to be output. When a request to output a web page to be reconstructed, corresponding to the output object, is received, the processor 120 may use the extracted style information. When reconstructing a web page, the processor 120 may reconstruct the web page by optimizing or processing the style information.

In operation 515, the processor 120 may store the reconstructed web page in a memory 130 of FIG. 2. The processor 120 may store reconstructed web pages in an area of the memory 130, set to a default, or in an area of the memory 130, specified by a user input.

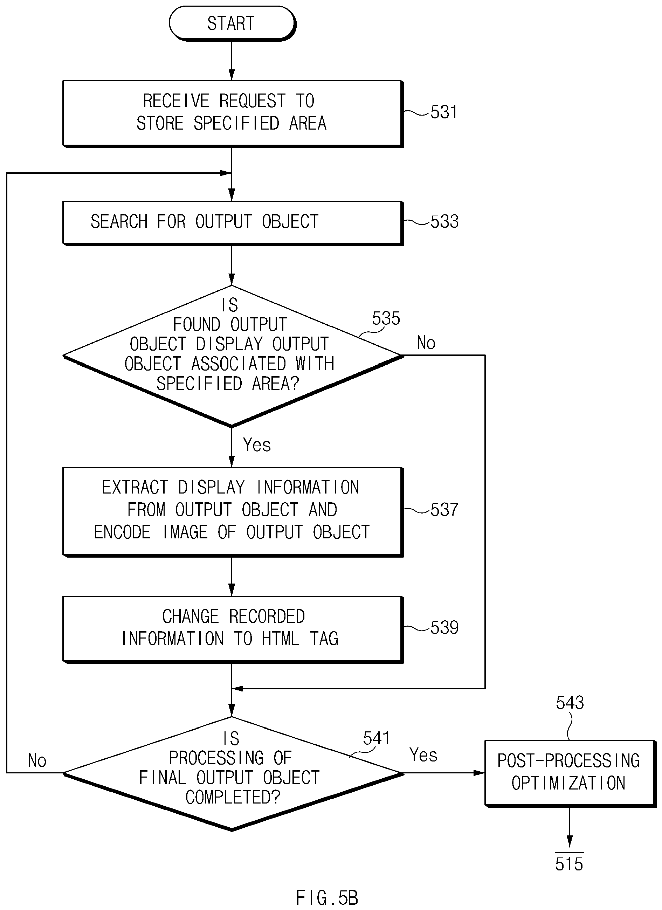

FIG. 5B is a flowchart illustrating another example of a web page storage method according to an example embodiment.

Referring to FIG. 5B, in connection with the web page storage method, in operation 531, a processor 120 of FIG. 2 may receive a request to store a specified area. The request to store the specified area may include, for example, a user input signal or occurrence of an event based on specified scheduling. If a request to store a specified area of a web page is generated, in operation 533, the processor 120 may search for output objects associated with the web page requested to be stored.

In operation 535, the processor 120 may determine whether the found output object is a display output object associated with the specified area. The specified area may be, for example, the entire area of a display 160 of FIG. 2 or an area partially selected based on a user input in an area of the display 160. If the found output object is not the display output object associated with the specified area, the processor 120 may branch to operation 541 by skipping operations 537 and 539.

If the found output object is the display output object associated with the specified area, in operation 537, the processor 120 may extract display information from the output object and may encode an image of the output object. For example, the processor 120 may extract display location information on the display 160 from the output object. In connection with storing output objects, the processor 120 may encode the output objects into an image in case of a plug/canvas tag which may not be in the form of HTML.

The processor 120 may display a used mark for a style used in a process of extracting a style of an output object. The processor 120 may verify whether a calculated style is inherited based on a hierarchical relationship and may display a used mark for a parent style. The processor 120 may encode an image of a specific output object. For example, if an output object is an object of an SVG format and if an image size is greater than a specified size (e.g., width × height × 4), the processor 120 may decode an image of the output object. In case of plugin data and Base64Image data, the processor 120 may encode an image of an output image as a joint photographic coding experts group/portable network graphics (JPEG /PNG) image. If an image size is reduced, the processor 120 may adjust the specified size in response to the reduced image size. The processor 120 may reconstruct encoded data based on an HTML grammar using a coordinate and style of an extracted output object. The processor 120 may clip an area to be shown and may calculate a coordinate again to correct the coordinate again. The processor 120 may extract a style used in a document and may use the extracted style again. The processor 120 may remove a style which is not marked from the document. As described above, the processor 120 may write an HTML document for tags or elements, such as "image", "div", "form", and "text", for configuring a screen.

In operation 539, the processor 120 may change recorded information to an HTML tag based on display information of the output object. The processor 120 may generate a new HTML document based on HTML tags.

In operation 541, the processor 120 may determine whether the currently found output object among the output objects included in the web page is a final output object. If the currently found output object is the final output object, in operation 543, the processor 120 may perform post-processing optimization. For example, the processor 120 may remove an unnecessary blank of a new HTML document generated using HTML tags or may simplify link information. The simplifying of the link information may include, for example, reducing a previous link name to a specified size or less or replacing a path of storing linked information (e.g., being replaced with an access path to the memory 130 of the electronic device 100). The operation may include changing a file name. For example, an absolute path (e.g., http://images.google.com/abcdefg%1%2%3%4%5.jpg) of an image file, described in an HTML tag, may be corrected to a relative path (e.g.,./img/a.jpg). The processor 150 may perform operation 515 described with reference to FIG. 5A. If the currently found output object is the final output object, the processor 120 may branch to operation 533 to perform the operation again from operation 533.

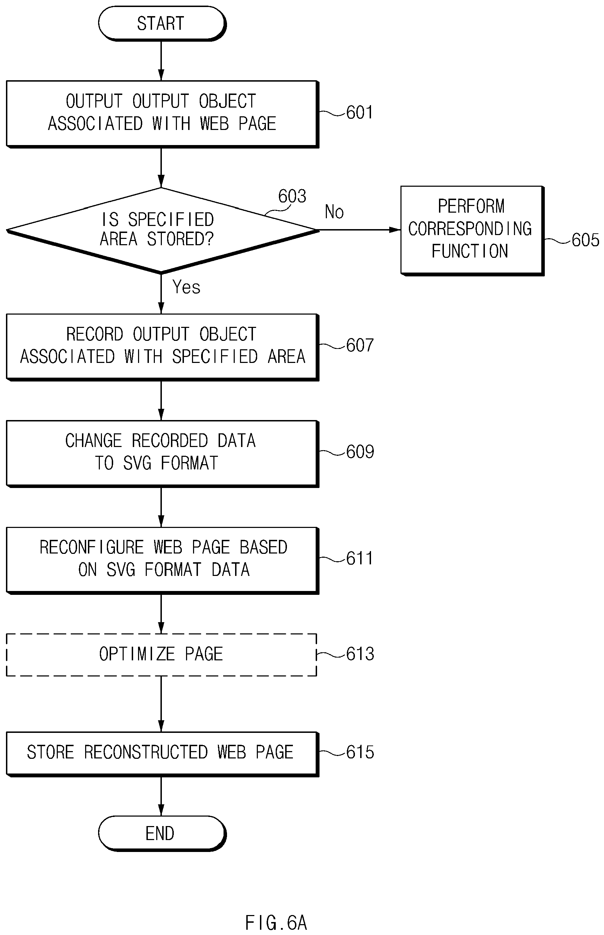

FIG. 6A is a flowchart illustrating an example of a web page storage method using an SVG format according to an example embodiment.

Referring to FIG. 6A, in connection with the web page storage method using the SVG format, in operation 601, a processor 120 of FIG. 2 may output an output object associated with a web page. For example, the processor 120 may output a web page on a display 160 of FIG. 2 based on web page information received from a server 200 of FIG. 1.

If an input event is generated, in operation 603, the processor 120 may determine whether the generated input event is an input event associated with storing a web page. If the generated input event is an input event which is not associated with storing the web page, in operation 605, the processor 120 may execute a function corresponding to the input event. For example, the processor 120 may perform a function such as a web page conversion function or a scroll function in response to the input event.

If the generated input event is the input event associated with storing the web page, in operation 607, the processor 120 may record (or draw) an output object associated with a specified area. The processor 120 may extract an output object associated with the specified area (e.g., an output object which is being output on the display 160 or an output object which is being output on part of the entire area of the display 160, specified by a user input). The processor 120 may record content information of the extracted output object (e.g., at least one of text or an image) based on a specified type.

In operation 609, the processor 120 may change the recorded data to an SVG format. For example, the processor 120 may change an SVG format of encoded data using a graphics library (e.g., a skia graphics library or a cairo graphics library) provided from a browser 20 of FIG. 2. In connection with link information when the SVG format is changed, the processor 120 may change the SVG format to a format which has specified name or title information and a reference path in a memory 130 of FIG. 2.

In operation 611, the processor 120 may reconstruct or reconfigure a web page based on SVG format data. For example, the processor 120 may write an HTML web page by arranging an image encoded again based on the SVG format data based on a coordinate of each of output objects associated with a specified area.

Optionally, in operation 613, the processor 120 may optimize a web page. For example, the processor 120 may delete an unnecessary blank in the reconstructed HTML web page. The processor 120 may change a link URL to be short to a specified length or less. In operation 615, if optimizing the web page, the processor 120 may store a reconstructed web page finally converted after the web page is optimized in the memory 130.

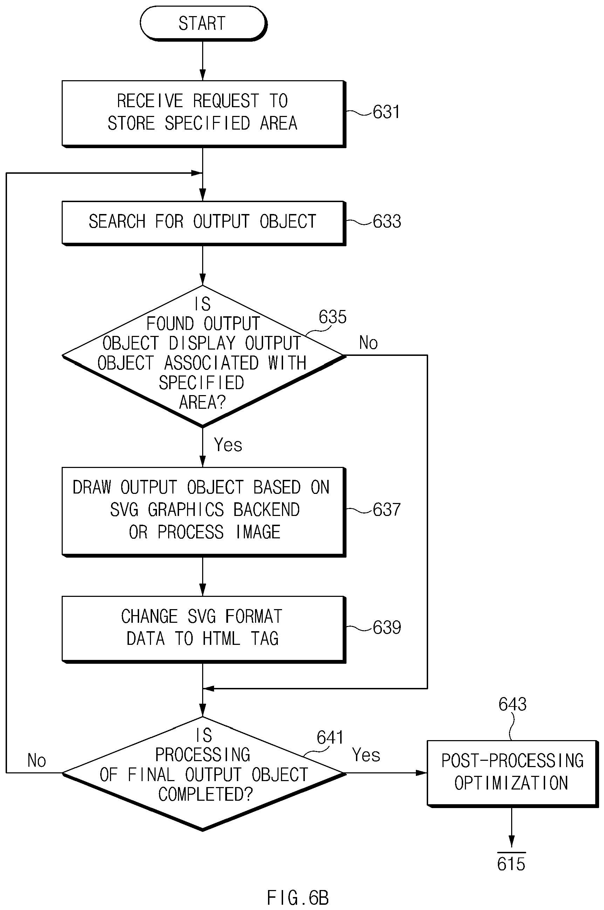

FIG. 6B is a flowchart illustrating another example of a web page storage method using an SVG format according to an example embodiment.

Referring to FIG. 6B, in connection with the web page storage method using the SVG format, in operation 631, a processor 120 of FIG. 2 may receive a request to store a specified area. The request to store the specified area may include, for example, a user input for specifying and storing at least part of a web page in a state where the web page is output. If an event associated with a request to store the specified area is generated, in operation 633, the processor 120 may search for output objects. If the output object is found, in operation 635, the processor 120 may determine whether the found output object is a display output object associated with the specified area. If the found output object is not the display output object associated with the specified area, the processor 120 may branch to operation 641 by skipping subsequent operations, for example, operations 637 and 639.

If the found output object is the display output object associated with the specified area, in operation 637, the processor 120 may draw an output object based on an SVG graphics backend or may perform image processing. In operation 639, the processor 120 may change SVG format data to an HTML tag. The processor 120 may generate a new HTML document based on HTML tags. In operation 641, the processor 120 may determine whether a currently processed output object is a final output object. If the currently processed output object is the final output object, in operation 643, the processor 120 may perform post-processing optimization. For example, the processor 120 may remove an unnecessary blank of a new HTML document generated using HTML tags or may simplify link information. The simplifying of the link information may include, for example, reducing a previous link name to a specified size or less or replacing a path of storing linked information (e.g., being replaced with a path of accessing a memory 130 of the electronic device 100). Next, the processor 120 may perform operation 615 described with reference to FIG. 6A.

If the currently processed output object is not the final output object, the processor 120 may branch to operation 633 to perform the above-mentioned operation from operation 633 until the final output object.

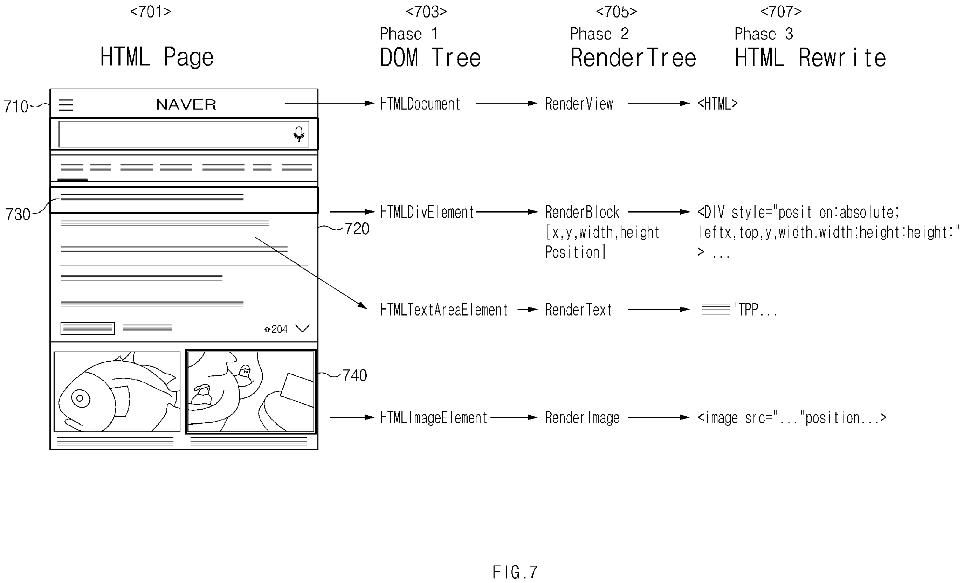

FIG. 7 is a drawing illustrating an example of a web page conversion stage according to an example embodiment.

Referring to FIG. 7, if an electronic device 100 of FIG. 2 accesses a server 200 of FIG. 1, the server 200 may provide web page information (e.g., first HTML data) to the electronic device 100. In state 701, the processor 120 of FIG. 2 may output a specified area in an area where the web page information is displayed, on a display 160 of FIG. 2. The web page displayed on the display 160 may include, for example, a document area 710, a box area (e.g., an area defined with a "div" tag), a text area 730, an image area 740, and the like. As illustrated in FIG. 7, other images and text areas may be output on the display 160.

The processor 120 may configure (or generate) a DOM tree based on the web page information (e.g., an HTML source) in state 703. For example, referring to state 701, the DOM tree may include an HTMLDocument object corresponding to the document area 710, an HTMLDivElement object corresponding to the box area 720, an HTMLTextAreaElement object corresponding to the text area 730, and an HTMLImageElement object corresponding to the image area 740.

The processor 120 may generate an output object tree configured with output objects output on the display 160 based on the DOM tree in state 705. Assuming that the display 160 is in state 701, the output object tree may include a RenderView object corresponding to the HTMLDocument object of the DOM tree, a RenderBlock object corresponding to the HTMLDivElement object of the DOM tree, a RenderText object corresponding to the HTMLTextAreaElement object of the DOM tree, and a RenderImage object corresponding to the HTMLImageElement object of the DOM tree.

If reconfiguring an HTML document based on a style of an output object, as shown in FIG. 7, the processor 120 may reconfigure a web page (e.g., second HTML data) including <HTML>, <DIV style=∼>..., "content...", <image src=∼> in state 707.

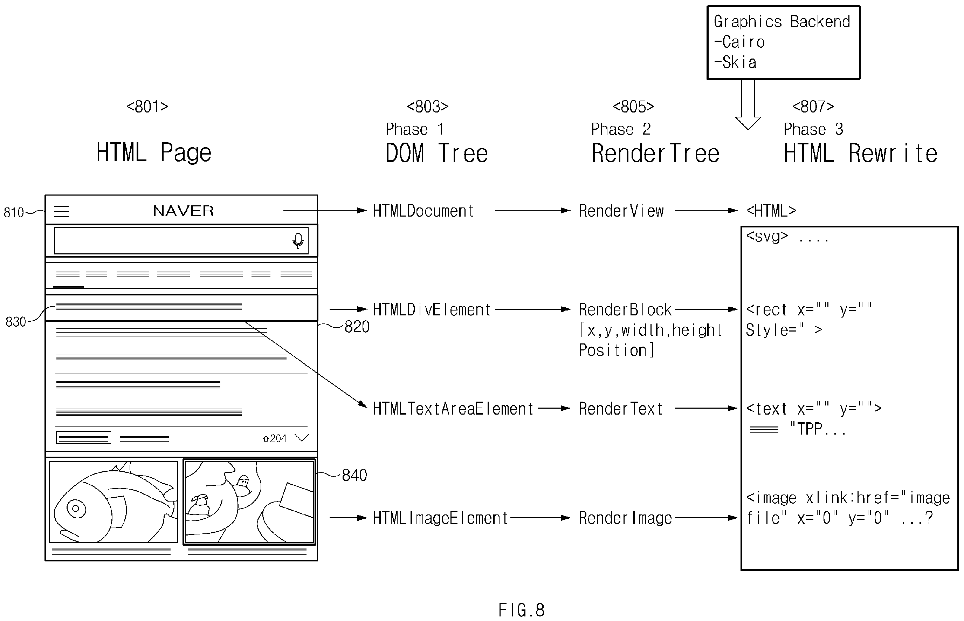

FIG. 8 is a drawing illustrating another example of a web page conversion stage according to an example embodiment.

Referring to FIG. 8, in state 801, web page information received at an electronic device 100 of FIG. 2 from a server 200 of FIG. 1 may be output on a display 160 of FIG. 2. The web page output on the display 160 may include various image areas, various box areas, and various text areas. For example, the web page may include a document area 810, a box area 820 (e.g., an area defined with a "div" tag), a text area 830, and an image area 840.

The processor 120 may generate a DOM tree based on the web page information (e.g., an HTML source). For example, each of the document area 810, the box area 820, the text area 830, and the image area 840 described in state 801 may be generated as a DOM object. For example, in state 803, the document area 810 may be generated as an HTMLDocument DOM object of a DOM tree. In state 803, the box area 820 may be generated as an HTMLDivElement DOM object of the DOM tree. The text area 830 may be generated as an HTMLTextAreaElement DOM object of the DOM tree. The image area 840 may be generated as an HTMLImageElement DOM object of the DOM tree. Also, the processor 120 may generate an output object tree corresponding to the above-mentioned DOM trees. If an embodiment is exemplified as the image area 840, the text area 830, and the box area 820 are output in state 801 on the display 160, in state 805, the output object tree may include a RenderView object corresponding to the HTMLDocument object of the DOM tree, a RenderBlock object corresponding to the HTMLDivElement object of the DOM tree, a RenderText object corresponding to the HTMLTextAreaElement object of the DOM tree, and a RenderImage object corresponding to the HTMLImageElement object of the DOM tree.

The processor 120 may convert the above-mentioned output objects to an SVG format using a graphics library (e.g., a cairo graphics library or a skia graphics library). For example, the processor 120 may generate SVG format data corresponding to output objects which are being displayed on the display 160. In state 807, the SVG format data may include, for example, <HTML> syntax corresponding to the RenderView object, <rect> syntax corresponding to the RenderBlock object, <text> syntax corresponding to the RenderText object, and <image> syntax corresponding to the RenderImage object. The SVG format may include <SVG> syntax of guiding the beginning of the SVG format based on an HTML form and </SVG> syntax of guiding the end of the SVG format. The <rect> syntax may include information such as an X-axis height, a Y-axis height, and a style. The <text> syntax may include information such as an X-axis height, a Y-axis height, and contents of text. The <image> syntax may include link path information of an image file. The processor 120 may reconstruct an HTML web page including the above-mentioned syntax and may store the reconstructed HTML web page in a memory 130 of FIG. 2.

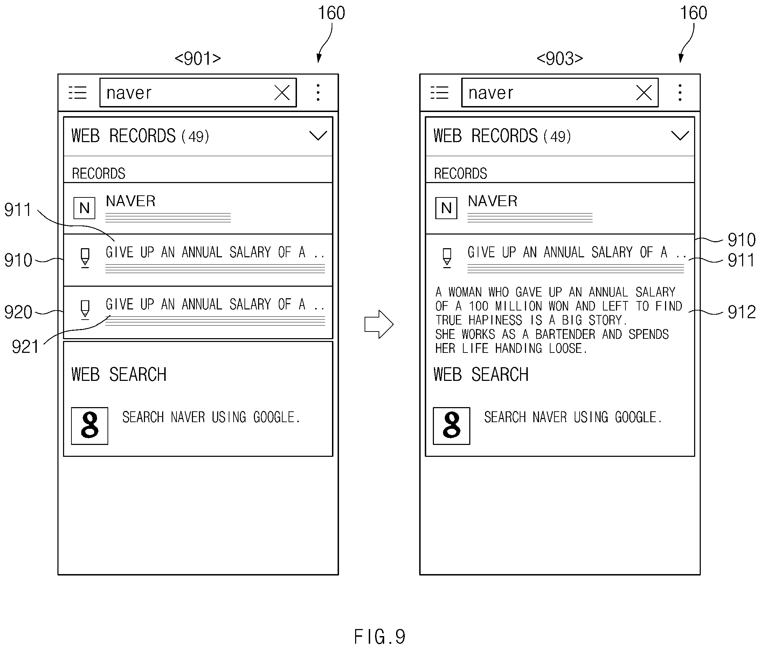

FIG. 9 is a drawing illustrating search function operation based on a reconstructed web page according to an example embodiment.

Referring to FIG. 9, an electronic device 100 of FIG. 2 may store at least one reconstructed web page in a memory 130 of FIG. 2. Also, the electronic device 100 may provide a function of searching for reconstructed web pages. According to an example embodiment, the electronic device 100 may store a web record web page. If receiving an event of requesting to output a web record web page, the electronic device 100 may output the web record web page on a screen 901 of a display 160 of FIG. 2. The web record web page output on the display 160 may be, for example, a web page including some of contents of the entire web page provided from a server 200 of FIG. 1. The web record web page may include, for example, at least one box area or text area. Referring to the screen 901, the web record web page may include a first box area 910, a first text area 911, a second box area 920, and a second text area 921. For example, the first box area 910 or the second box area 920 may be defined by an HTML DIV tag. The first text area 911 or the second text area 921 may include, for example, link information.

According to an example embodiment, if an input event for selecting the first text area 911 is generated, a processor 120 of the electronic device 100 may collect contents information 912 linked to the first text area 911. For example, the processor 120 may search an area of the memory 130 for the contents information 912 linked to the first text area 911. In this regard, the first text area 911 may include information about a path of storing the contents information 912 in the memory 130. If the first text area 912 is selected, the processor 120 may output the linked contents information 912 on a screen 903 of the display 160. In this operation, the processor 120 may not display the second box area 920 and the second text area 921 on the display 160 in consideration of a size of the screen 903.

The electronic device 100 according to various embodiments may reconstruct and store a web page as a new HTML web page in an operation of storing part of the web page. If a specified link is selected, the electronic device 100 may output the contents information 912 linked to the corresponding link. Also, the electronic device 100 may store relatively less data by storing only information associated with currently displayed output objects without storing information associated with the entire web page (e.g., the entire CSS/JS information of the web page and the like) in the operation of storing part of the web page.

According to various example embodiments, the above-mentioned electronic device 100 may search for text for specified contents by storing the contents information 912 in the form of text. For example, the electronic device 100 may provide a search interface. If a keyword is entered, the electronic device 100 may search the memory 130 for a reconstructed web page including information mapped to the entered keyword.

According to an example embodiment, since storing part of a web page displayed on the display 160, the electronic device 100 may store part of a web page without changing a layout. Also, the electronic device 100 may provide a service such as a service of collecting and classifying keywords in an operation of searching for stored reconstructed pages, classifying a search category based on a user's taste based on the keywords, providing a personalization service, for example, a search preference, and providing a customized page suitable for a user taste.

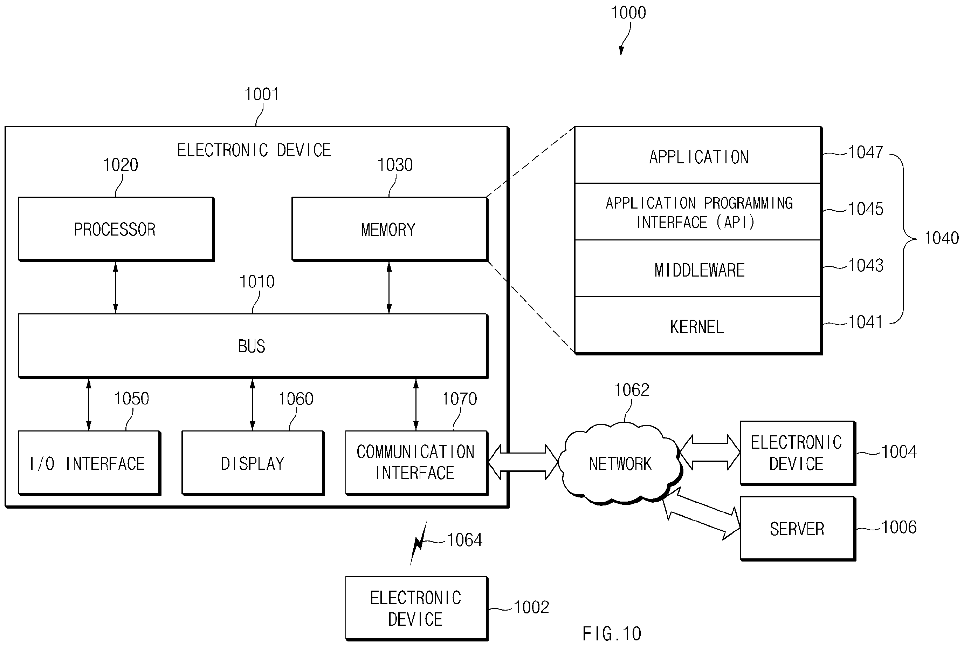

FIG. 10 is a block diagram illustrating an example electronic device operation environment according to an example embodiment.

Referring to FIG. 10, an electronic device operation environment 1000 may include an electronic device 1001, a first external electronic device 1002, a second external electronic device 1004, a server 1006, a network 1062, and the like.

The network 1062 may be configured to establish a communication channel between the electronic device 1001 and the second external electronic device 1004 or between the electronic device 1001 and the server 1006. Such network 1062 may send content stored in the electronic device 1001 to the second electronic device 1004 or the server 1006. The server 1006 may establish a communication channel with the electronic device 1001 over the network 1062.

The above-mentioned electronic device 1001 may include a bus 1010, a processor 1020, a memory 1030, an input/output (I/O) interface (e.g., including I/O circuitry) 1050, a display 1060, and a communication interface (e.g., including communication circuitry) 1070. Also, the electronic device 1001 may include an antenna connected with the communication interface 1070. The electronic device 1001 may receive a web page from the server 1006 via the communication circuitry of the communication interface 1070. In various example embodiments, at least one of the components of the electronic device 1001 may be omitted from the electronic device 1001, or another component may be additionally included in the electronic device 1001. The electronic device 1001 may include a housing (or a case) which covers and receives at least some of the above-mentioned components.

The bus 1010 may be, for example, a circuit which connects the components 1020 to 1070 with each other and transmits a communication signal (e.g., a control message and/or data) between the components.

The processor 1020 may include one or more of a central processing unit (CPU), an application processor (AP), or a communication processor (CP). For example, the processor 1020 may perform calculation or data processing about control and/or communication of at least another of the components of the electronic device 1001.

For example, the processor 1020 may receive a web page, may generate a DOM tree from the web page, may generate an output object tree from the DOM tree, and may configure a screen based on the output object tree. The processor 1020 may collect at least some of output objects which are being output on the display 1060 and may generate and store a reconstructed web page of the same or similar document form to that of a web page based on the collected output objects.

The memory 1030 may include a volatile and/or non-volatile memory. For example, the volatile memory of the memory 1030 may be used while an operation of temporarily storing a received web page, parsing an HTML source, configuring a DOM tree, or configuring an output object tree is performed. Also, the non-volatile memory (e.g., a non-volatile storage device) may store a reconstructed page generated based on output objects extracted from a specified area. The volatile memory may be used while the reconstructed page is output on the display 1060. For example, if a request to output a reconstructed page is received, an HTML source corresponding to the reconstructed page may be loaded into the volatile memory. The processor 1020 may configure a DOM tree based on the loaded HTML source or may configure an output object tree.

The memory 1030 may include a volatile and/or non-volatile memory. The memory 1030 may store, for example, a command or data associated with at least another of the components of the electronic device 1001. According to an example embodiment, the memory 1030 may store software and/or a program 1040. The program 1040 may include, for example, a kernel 1041, a middleware 1043, an application programming interface (API) 1045, and/or an least one application program 1047 (or "at least one application"), and the like. At least part of the kernel 1041, the middleware 1043, or the API 1045 may be referred to as an operating system (OS).

The kernel 1041 may control or manage, for example, system resources (e.g., the bus 1010, the processor 1020, or the memory 1030, and the like) used to execute an operation or function implemented in the other programs (e.g., the middleware 1043, the API 1045, or the application program 1047). Also, as the middleware 1043, the API 1045, or the application program 1047 accesses a separate component of the electronic device 1001, the kernel 1041 may provide an interface which may control or manage system resources.

The middleware 1043 may play a role as, for example, a go-between such that the API 1045 or the application program 1047 communicates with the kernel 1041 to communicate data.

Also, the middleware 1043 may process one or more work requests, received from the application program 1047, in order of priority. For example, the middleware 1043 may assign priority which may use system resources (the bus 1010, the processor 1020, or the memory 1030, and the like) of the electronic device 1001 to one or more of the at least one application program 1047. For example, the middleware 1043 may perform scheduling or load balancing for the one or more work requests by processing the one or more work requests in order of the priority assigned to the one or more of the at least one application program 1047.

The API 1045 may be, for example, an interface in which the application program 1047 controls a function provided from the kernel 1041 or the middleware 1043. For example, the API 1045 may include at least one interface or function (e.g., a command) for file control, window control, image processing, or text control, and the like.

The input and output interface 1050 may include various input/output (I/O) circuitry and be configured to play a role as, for example, an interface which may transmit a command or data input from a user or another external device to another component (or other components) of the electronic device 1001. The input and output interface 1050 may output an instruction or data received from another component (or other components) of the electronic device 1001 to the user or the other external device.

The display 1060 may include, for example, a liquid crystal display (LCD), a light emitting diode (LED) display, an organic LED (OLED) display, a microelectromechanical systems (MEMS) display, or an electronic paper display, or the like, but is not limited thereto. The display 1060 may display, for example, a variety of content (e.g., text, images, videos, icons, or symbols, and the like) to the user. The display 1060 may include a touch screen, and may receive, for example, touch, gesture, proximity, or a hovering input using an electronic pen or part of a body of the user.

The communication interface 1070 may include various communication circuitry configured to establish communication between, for example, the electronic device 1001 and an external device (e.g., a first external electronic device 1002, a second external electronic device 1004, or a server 1006). For example, the communication interface 1070 may include various circuitry to connect to a network 1062 through wireless communication or wired communication and may communicate with the external device (e.g., the second external electronic device 1004 or the server 1006).

The wireless communication may use, for example, at least one of long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM), and the like as a cellular communication protocol. Also, the wireless communication may include, for example, local-area communication 1064. The local-area communication 1064 may include, for example, at least one of wireless-fidelity (Wi-Fi) communication, Bluetooth (BT) communication, near field communication (NFC), or global navigation satellite system (GNSS) communication, and the like.

An MST module may generate a pulse based on transmission data using an electromagnetic signal and may generate a magnetic field signal based on the pulse. The electronic device 1001 may output the magnetic field signal to a point of sales (POS) system. The POS system may restore the data by detecting the magnetic field signal using an MST reader and converting the detected magnetic field signal into an electric signal.

The GNSS may include, for example, at least one of a global positioning system (GPS), a Glonass, a Beidou navigation satellite system (hereinafter referred to as "Beidou"), or a Galileo (i.e., the European global satellite-based navigation system) according to an available area or a bandwidth, and the like. Hereinafter, the "GPS" used herein may be interchangeably with the "GNSS". The wired communication may include at least one of, for example, universal serial bus (USB) communication, high definition multimedia interface (HDMI) communication, recommended standard 232 (RS-232) communication, or plain old telephone service (POTS) communication, and the like. The network 1062 may include a telecommunications network, for example, at least one of a computer network (e.g., a local area network (LAN) or a wide area network (WAN)), the Internet, or a telephone network.

Each of the first and second external electronic devices 1002 and 1004 may be the same as or different device from the electronic device 1001. According to an embodiment, the server 1006 may include a group of one or more servers. According to various example embodiments, all or some of operations executed in the electronic device 1001 may be executed in another electronic device or a plurality of electronic devices (e.g., the first external electronic device 1002, the second external electronic device 1004, or the server 1006). According to an example embodiment, if the electronic device 1001 should perform any function or service automatically or according to a request, it may request another device (e.g., the first external electronic device 1002, the second external electronic device 1004, or the server 1006) to perform at least part of the function or service, rather than executing the function or service for itself or in addition to the function or service. The other electronic device (e.g., the first external electronic device 1002, the second external electronic device 1004, or the server 1006) may execute the requested function or the added function and may transmit the executed result to the electronic device 1001. The electronic device 1001 may process the received result without change or additionally and may provide the requested function or service. For this purpose, for example, cloud computing technologies, distributed computing technologies, or client-server computing technologies may be used.

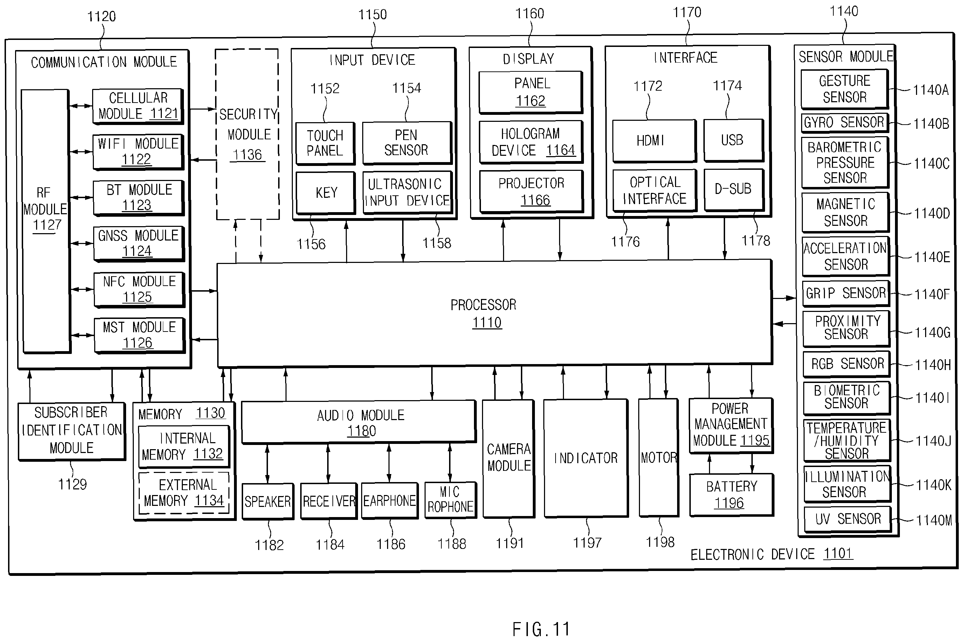

FIG. 11 is a block diagram illustrating an example configuration of an electronic device according to an example embodiment.

An electronic device 1101 may include all or some of components of an electronic device 100 of FIG. 2 or an electronic device 1001 of FIG. 10. The electronic device 1101 may include one or more processors 1110 (e.g., application processors (APs)), a communication module (e.g., including communication circuitry) 1120, a subscriber identity module (SIM) 1129, a memory 1130, a security module 1136, a sensor module 1140, an input device (e.g., including input circuitry) 1150, a display 1160, an interface (e.g., including interface circuitry) 1170, an audio module 1180, a camera module 1191, a power management module 1195, a battery 1196, an indicator 1197, and a motor 1198.

The processor 1110 may drive, for example, an operating system (OS) or an application program to control a plurality of hardware or software components connected thereto and may process and compute a variety of data. The processor 1110 may be implemented with, for example, processing circuitry, a system on chip (SoC), or the like. According to an example embodiment, the processor 1110 may include a graphic processing unit (GPU) (not shown) and/or an image signal processor (not shown). The processor 1110 may include at least some (e.g., a cellular module 1121) of the components shown in FIG. 11. The processor 1110 may load a command or data received from at least one of other components (e.g., a non-volatile memory) into a volatile memory to process the data and may store various data in a non-volatile memory. For example, the processor 1110 may load at least part of data corresponding to an HTML source, a DOM tree, an output object tree, or the like of a web page into a volatile memory to process the data and may store a reconstructed page in a non-volatile memory.

The communication module 1120 may have the same or similar configuration to a communication interface 1370 of FIG. 10. The communication module 1120 may include various communication circuitry, such as, for example, and without limitation, the cellular module 1121, a wireless-fidelity (Wi-Fi) module 1122, a Bluetooth (BT) module 1123, a global navigation satellite system (GNSS) module 1124 (e.g., a GPS module, a Glonass module, a Beidou module, or a Galileo module), a near field communication (NFC) module 1125, an MST module 1126, and a radio frequency (RF) module 1127.

The cellular module 1121 may provide, for example, a voice call service, a video call service, a text message service, or an Internet service, and the like through a communication network. According to an embodiment, the cellular module 1121 may identify and authenticate the electronic device 1101 in a communication network using the SIM 1129 (e.g., a SIM card). According to an embodiment, the cellular module 1121 may perform at least part of functions which may be provided by the processor 1110. According to an embodiment, the cellular module 1121 may include a communication processor (CP).

The Wi-Fi module 1122, the BT module 1123, the GNSS module 1124, the NFC module 1125, or the MST module 1126 may include, for example, a processor for processing data transmitted and received through the corresponding module. According to various embodiments, at least some (e.g., two or more) of the cellular module 1121, the Wi-Fi module 1122, the BT module 1123, the GNSS module 1124, the NFC module 1125, or the MST module 1126 may be included in one integrated chip (IC) or one IC package.

The RF module 1127 may transmit and receive, for example, a communication signal (e.g., an RF signal). Though not shown, the RF module 1127 may include, for example, a transceiver, a power amplifier module (PAM), a frequency filter, or a low noise amplifier (LNA), or an antenna, and the like. According to another embodiment, at least one of the cellular module 1121, the Wi-Fi module 1122, the BT module 1123, the GNSS module 1124, the NFC module 1125, or the MST module 1126 may transmit and receive an RF signal through a separate RF module.

The SIM 1129 may include, for example, a card which includes a SIM and/or an embedded SIM. The SIM 1129 may include unique identification information (e.g., an integrated circuit card identifier (ICCID)) or subscriber information (e.g., an international mobile subscriber identity (IMSI)).

The memory 1130 (e.g., a memory 1030 of FIG. 10) may include, for example, an embedded memory 1132 or an external memory 1134. The embedded memory 1132 may include at least one of, for example, a volatile memory (e.g., a dynamic random access memory (DRAM), a static RAM (SRAM), a synchronous dynamic RAM (SDRAM), and the like), or a non-volatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory, and the like), a hard drive, or a solid state drive (SSD)).

The external memory 1134 may include a flash drive, for example, a compact flash (CF), a secure digital (SD), a micro-SD, a mini-SD, an extreme digital (xD), a multimedia card (MMC), or a memory stick, and the like. The external memory 1134 may operatively and/or physically connect with the electronic device 1101 through various interfaces.

The security module 1136 may be a module which has a relatively higher secure level than the memory 1130 and may be a circuit which stores secure data and guarantees a protected execution environment. The secure module 1136 may be implemented with a separate circuit and may include a separate processor. The secure module 1136 may include, for example, an embedded secure element (eSE) which is present in a removable smart chip or a removable SD card or is embedded in a fixed chip of the electronic device 1101. Also, the secure module 1136 may be driven by an OS different from the OS of the electronic device 1101. For example, the secure module 1136 may operate based on a java card open platform (JCOP) OS.

The sensor module 1140 may measure, for example, a physical quantity or may detect an operation state of the electronic device 1101, and may convert the measured or detected information to an electrical signal. The sensor module 1140 may include at least one of, for example, a gesture sensor 1140A, a gyro sensor 1140B, a barometric pressure sensor 1140C, a magnetic sensor 1140D, an acceleration sensor 1140E, a grip sensor 1140F, a proximity sensor 1140G, a color sensor 1140H (e.g., red, green, blue (RGB) sensor), a biometric sensor 1140I, a temperature/humidity sensor 1140J, an illumination sensor 1140K, or an ultraviolet (UV) sensor 1140M. Additionally or alternatively, the sensor module 1140 may further include, for example, an e-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris sensor (not shown), and/or a fingerprint sensor (not shown), and the like. The sensor module 1140 may further include a control circuit for controlling at least one or more sensors included therein. According to various embodiments, the electronic device 1101 may further include a processor configured to control the sensor module 1140, as part of the processor 1110 or to be independent of the processor 1110. While the processor 1110 is in a sleep state, the electronic device 1101 may control the sensor module 1140.

The input device 1150 may include various input circuitry, such as, for example, and without limitation a touch panel 1152, a (digital) pen sensor 1154, a key 1156, or an ultrasonic input device 1158. The touch panel 1152 may use at least one of, for example, a capacitive type, a resistive type, an infrared type, or an ultrasonic type. Also, the touch panel 1152 may further include a control circuit. The touch panel 1152 may further include a tactile layer and may provide a tactile reaction to a user.

The (digital) pen sensor 1154 may be, for example, part of the touch panel 1152 or may include a separate sheet for recognition. The key 1156 may include, for example, a physical button, an optical key, or a keypad. The ultrasonic input device 1158 may allow the electronic device 1101 to detect a sound wave using a microphone (e.g., a microphone 1188) and to verify data through an input tool generating an ultrasonic signal.

The display 1160 (e.g., a display 1060 of FIG. 10) may include a panel 1162, a hologram device 1164, or a projector 1166. The panel 1162 may include the same or similar configuration to the display 160 or 1060. The panel 1162 may be implemented to be, for example, flexible, transparent, or wearable. The panel 1162 and the touch panel 1152 may be integrated into one module. The hologram device 1164 may show a stereoscopic image in a space using interference of light. The projector 1166 may project light onto a screen to display an image. The screen may be positioned, for example, inside or outside the electronic device 1101. According to an embodiment, the display 1160 may further include a control circuit for controlling the panel 1162, the hologram device 1164, or the projector 1166.

The interface 1170 may include various interface circuitry, such as, for example, and without limitation, a high-definition multimedia interface (HDMI) 1172, a universal serial bus (USB) 1174, an optical interface 1176, or a D-subminiature 1178. The interface 1170 may be included in, for example, a communication interface 170 or 1070 illustrated in FIG. 2 or 10. Additionally or alternatively, the interface 1170 may include, for example, a mobile high definition link (MHL) interface, an SD card/multimedia card (MMC) interface, or an infrared data association (IrDA) standard interface.

The audio module 1180 may convert a sound and an electric signal in dual directions. At least part of components of the audio module 1180 may be included in, for example, an input and output interface 1050 (or a user interface) shown in FIG. 10. The audio module 1180 may process sound information input or output through, for example, a speaker 1182, a receiver 1184, an earphone 1186, or the microphone 1188, and the like.

The camera module 1191 may be a device which captures a still image and a moving image. According to an embodiment, the camera module 1191 may include one or more image sensors (not shown) (e.g., a front sensor or a rear sensor), a lens (not shown), an image signal processor (ISP) (not shown), or a flash (not shown) (e.g., an LED or a xenon lamp).

The power management module 1195 may manage, for example, power of the electronic device 1101. According to an embodiment, though not shown, the power management module 1195 may include a power management integrated circuit (PMIC), a charger IC or a battery or fuel gauge. The PMIC may have a wired charging method and/or a wireless charging method. The wireless charging method may include, for example, a magnetic resonance method, a magnetic induction method, or an electromagnetic method, and the like. An additional circuit for wireless charging, for example, a coil loop, a resonance circuit, or a rectifier, and the like may be further provided. The battery gauge may measure, for example, the remaining capacity of the battery 1196 and voltage, current, or temperature thereof while the battery 1196 is charged. The battery 1196 may include, for example, a rechargeable battery or a solar battery.

The indicator 1197 may display a specific state of the electronic device 1101 or part (e.g., the processor 1110) thereof, for example, a booting state, a message state, or a charging state, and the like. The motor 1198 may convert an electric signal into mechanical vibration and may generate vibration or a haptic effect, and the like. Though not shown, the electronic device 1101 may include a processing unit (e.g., a GPU) for supporting a mobile TV. The processing unit for supporting the mobile TV may process media data according to standards, for example, a digital multimedia broadcasting (DMB) standard, a digital video broadcasting (DVB) standard, or a mediaFloTM standard, and the like.

Each of the above-mentioned elements of the electronic device according to various example embodiments of the present disclosure may be configured with one or more components, and names of the corresponding elements may be changed according to the type of the electronic device. The electronic device according to various example embodiments of the present disclosure may include at least one of the above-mentioned elements, some elements may be omitted from the electronic device, or other additional elements may be further included in the electronic device. Also, some of the elements of the electronic device according to various embodiments of the present disclosure may be combined with each other to form one entity, thereby making it possible to perform the functions of the corresponding elements in the same manner as before the combination.

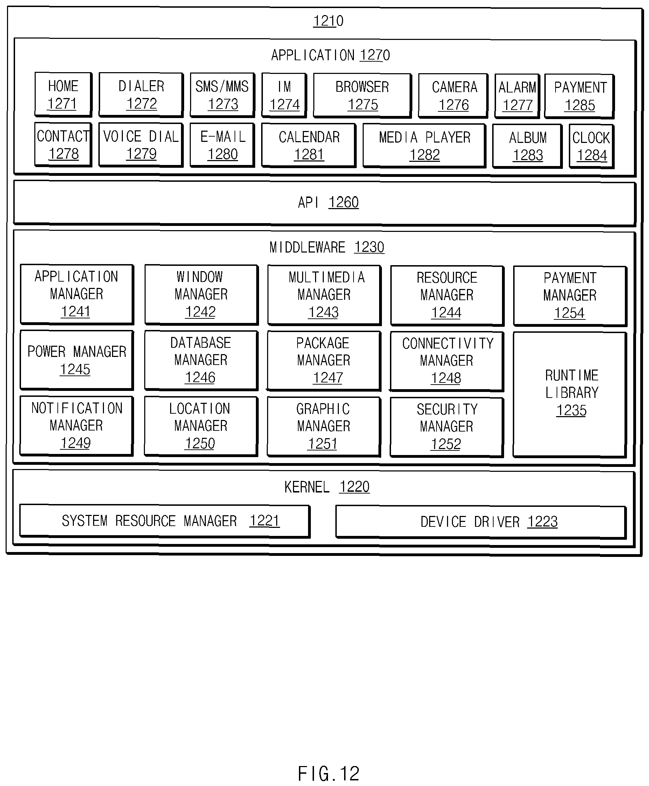

FIG. 12 is a block diagram illustrating an example configuration of a program module according to various example embodiments.

According to an example embodiment, a program module 1210 (e.g., a program 1140 of FIG. 10) may include an OS of controlling resources associated with an electronic device (e.g., an electronic device 100 of FIG. 1, an electronic device 1001 of FIG. 10, or an electronic device 1101 of FIG. 11) and/or various applications (e.g., an application program 1270) executed on the OS. The OS may be, for example, Android, iOS, Windows, Symbian, Tizen, Bada, or the like.

The program module 1210 may include a kernel 1220, a middleware 1230, an application programming interface (API) 1260, and/or an application 1270. At least part of the program module 1210 may be preloaded on the electronic device, or may be downloaded from an external electronic device (e.g., a first external electronic device 1002, a second external electronic device 1004, or a server 1006, and the like of FIG. 10).

The kernel 1220 (e.g., a kernel 1041 of FIG. 10) may include, for example, a system resource manager 1221 and/or a device driver 1223. The system resource manager 1221 may control, assign, or collect, and the like system resources. According to an embodiment, the system resource manager 1221 may include a process management unit, a memory management unit, or a file system management unit, and the like. The device driver 1223 may include, for example, a display driver, a camera driver, a Bluetooth (BT) driver, a shared memory driver, a universal serial bus (USB) driver, a keypad driver, a wireless-fidelity (Wi-Fi) driver, an audio driver, or an interprocess communication (IPC) driver.

The middleware 1230 (e.g., a middleware 1043 of FIG. 10) may provide, for example, functions the application 1270 needs in common, and may provide various functions to the application 1270 through the API 1260 such that the application 1270 efficiently uses limited system resources in the electronic device. According to an embodiment, the middleware 1230 (e.g., the middleware 1043) may include at least one of a runtime library 1235, an application manager 1241, a window manager 1242, a multimedia manager 1243, a resource manager 1244, a power manager 1245, a database manager 1246, a package manager 1247, a connectivity manager 1248, a notification manager 1249, a location manager 1250, a graphic manager 1251, a security manager 1252, or a payment manager 1254.

The runtime library 1235 may include, for example, a library module used by a compiler to add a new function through a programming language while the application 1270 is executed. The runtime library 1235 may perform a function about input and output management, memory management, or an arithmetic function.

The application manager 1241 may manage, for example, a life cycle of at least one of the application 1270. The window manager 1242 may manage graphic user interface (GUI) resources used on a screen of the electronic device. The multimedia manager 1243 may determine a format utilized for reproducing various media files and may encode or decode a media file using a codec corresponding to the corresponding format. The resource manager 1244 may manage source codes of at least one of the application 1270, and may manage resources of a memory or a storage space, and the like.

The power manager 1245 may act together with, for example, a basic input/output system (BIOS) and the like, may manage a battery or a power source, and may provide power information utilized for an operation of the electronic device. The database manager 1246 may generate, search, or change a database to be used in at least one of the application 1270. The package manager 1247 may manage installation or update of an application distributed by a type of a package file.

The connectivity manager 1248 may manage, for example, wireless connection such as Wi-Fi connection or BT connection, and the like. The notification manager 1249 may display or notify events, such as an arrival message, an appointment, and proximity notification, by a method which is not disturbed to the user. The location manager 1250 may manage location information of the electronic device. The graphic manager 1251 may manage a graphic effect to be provided to the user or a user interface (UI) related to the graphic effect. The security manager 1252 may provide all security functions utilized for system security or user authentication, and the like. According to an embodiment, when the electronic device (e.g., an electronic device 100 or 1001 of FIG. 1 or 10) has a phone function, the middleware 1230 may further include a telephony manager (not shown) for managing a voice or video communication function of the electronic device.

The middleware 1230 may include a middleware module which configures combinations of various functions of the above-described components. The middleware 1230 may provide a module which specializes according to kinds of OSs to provide a differentiated function. Also, the middleware 1230 may dynamically delete some of old components or may add new components.

The API 1260 (e.g., an API 1045 of FIG. 10) may be, for example, a set of API programming functions, and may be provided with different components according to OSs. For example, in case of Android or iOS, one API set may be provided according to platforms. In case of Tizen, two or more API sets may be provided according to platforms.

The application 1270 (e.g., an application program 1047 of FIG. 10) may include one or more of, for example, a home application 1271, a dialer application 1272, a short message service/multimedia message service (SMS/MMS) application 1273, an instant message (IM) application 1274, a browser application 1275, a camera application 1276, an alarm application 1277, a contact application 1278, a voice dial application 1279, an e-mail application 1280, a calendar application 1281, a media player application 1282, an album application 1283, a clock application 1284, a payment application 1285, a health care application (e.g., an application for measuring quantity of exercise or blood sugar, and the like), or an environment information application (e.g., an application for providing atmospheric pressure information, humidity information, or temperature information, and the like), and the like.

According to an example embodiment, the application 1270 may include an application (hereinafter, for better understanding and ease of description, referred to as "information exchange application") for exchanging information between the electronic device (e.g., the electronic device 1001 of FIG. 10) and an external electronic device (e.g., the first external electronic device 1002 or the second external electronic device 1004). The information exchange application may include, for example, a notification relay application for transmitting specific information to the external electronic device or a device management application for managing the external electronic device.

For example, the notification relay application may include a function of transmitting notification information, which is generated by other applications (e.g., the SMS/MMS application, the e-mail application, the health care application, or the environment information application, and the like) of the electronic device, to the external electronic device (e.g., the first external electronic device 1002 or the second external electronic device 1004). Also, the notification relay application may receive, for example, notification information from the external electronic device, and may provide the received notification information to the user of the electronic device.

The device management application may manage (e.g., install, delete, or update), for example, at least one (e.g., a function of turning on/off the external electronic device itself (or partial components) or a function of adjusting brightness (or resolution) of a display) of functions of the external electronic device (e.g., the first external electronic device 1002 or the second external electronic device 1004) which communicates with the electronic device, an application which operates in the external electronic device, or a service (e.g., a call service or a message service) provided from the external electronic device.

According to an example embodiment, the application 1270 may include an application (e.g., the health card application of a mobile medical device) which is preset according to attributes of the external electronic device (e.g., the first external electronic device 1002 or the second external electronic device 1004). According to an example embodiment, the application 1270 may include an application received from the external electronic device (e.g., the server 1006, the first external electronic device 1002, or the second external electronic device 1004). According to an embodiment, the application 1270 may include a preloaded application or a third party application which may be downloaded from a server. Names of the components of the program module 1210 according to various embodiments of the present disclosure may differ according to kinds of OSs.

According to various example embodiments, at least part of the program module 1210 may be implemented with software, firmware, hardware, or at least two or more combinations thereof. At least part of the program module 1210 may be implemented (e.g., executed) by, for example, a processor (e.g., a processor 1020 of FIG. 10). At least part of the program module 1210 may include, for example, a module, a program, a routine, sets of instructions, or a process, and the like for performing one or more functions.

According to an example embodiment, the application 1270 may include a browser application. The browser application may receive a web page from a server and may output at least some of the received web pages on a display. According to various embodiments, the application 1270 may include a web page storage application. The web page storage application may generate part of the entire area of a web page which is being output on the display as a reconstructed page which has the same or similar document form to that of the web page and has less data than data of the entire area of the web page and may store the generated reconstructed page. The web page storage application may be included in, for example, the browser application.

According to various example embodiments, the electronic device may effectively store data associated with a web page and may operate a search function and the like based on a stored web page.

The terminology "module" used herein may refer, for example, to a unit including one of hardware (e.g., circuitry), software, and firmware or two or more combinations thereof. The terminology "module" may be interchangeably used with, for example, terminologies "unit", "logic", "logical block", "component", or "circuit", and the like. The "module" may be a minimum unit of an integrated component or a part thereof. The "module" may be a minimum unit performing one or more functions or a part thereof. The "module" may be mechanically or electronically implemented. For example, the "module" may include at least one of processing circuitry, an application-specific integrated circuit (ASIC) chip, field-programmable gate arrays (FPGAs), or a programmable-logic device, which is well known or will be developed in the future, for performing certain operations.

According to various example embodiments of the present disclosure, at least part of a device (e.g., modules or the functions) or a method (e.g., operations) may be implemented with, for example, instructions stored in computer-readable storage media which have a program module. When the instructions are executed by a processor, one or more processors may perform functions corresponding to the instructions. The computer-readable storage media may be, for example, a memory.

The computer-readable storage media may include a hard disc, a floppy disk, magnetic media (e.g., a magnetic tape), optical media (e.g., a compact disc read only memory (CD-ROM) and a digital versatile disc (DVD)), magneto-optical media (e.g., a floptical disk), a hardware device (e.g., a ROM, a random access memory (RAM), or a flash memory, and the like), and the like. Also, the program instructions may include not only machine codes compiled by a compiler but also high-level language codes which may be executed by a computer using an interpreter and the like. The above-mentioned hardware device may be configured to operate as one or more software modules to perform operations according to various embodiments of the present disclosure, and vice versa.

Modules or program modules according to various example embodiments of the present disclosure may include at least one or more of the above-mentioned components, some of the above-mentioned components may be omitted, or other additional components may be further included. Operations executed by modules, program modules, or other components may be executed by a successive method, a parallel method, a repeated method, or a heuristic method. Also, some operations may be executed in a different order or may be omitted, and other operations may be added.

Embodiments of the present disclosure described and illustrated in the drawings are provided as examples to describe technical content and help understanding but do not limit the present disclosure. Accordingly, it should be understood that besides the example embodiments listed herein, all modifications or modified forms derived based on the technical ideas of the present disclosure are included in the present disclosure as defined in the claims, and their equivalents.

The above-described example embodiments of the present disclosure can be implemented in hardware (e.g., circuitry), firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein.

The control unit may include a microprocessor or any suitable type of processing circuitry, such as one or more general-purpose processors (e.g., ARM-based processors), a Digital Signal Processor (DSP), a Programmable Logic Device (PLD), an Application-Specific Integrated Circuit (ASIC), a Field-Programmable Gate Array (FPGA), a Graphical Processing Unit (GPU), a video card controller, etc. In addition, it will be understood that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. In addition, an artisan understands and appreciates that a "processor" or "microprocessor" may be hardware in the claimed disclosure.

## Claims

1. An electronic device, comprising:
a communication circuit configured to establish wired or wireless a communication channel with the Internet;
a display;
input circuitry configured to be included on the display or be independent of the display;
a non-volatile storage device configured to store a software program for at least web browsing;
a processor comprising processing circuitry configured to be electrically connected with the communication circuit, the display, the input circuitry, and the non-volatile storage device; and
a volatile memory configured to be electrically connected with the processor,
wherein the non-volatile storage device stores instructions executed by the processor, the processor configured to:
output a user interface associated with the software program on the display, receive first hypertext markup language (HTML) data through the communication circuit and parse the first HTML data in response to receiving a first input from the input circuitry, and temporarily store the parsed first HTML data in the volatile memory;
generate a first output object tree based on at least part of the stored first HTML data;
output a web page on the user interface based on at least part of the first output object tree, generate second HTML data including part of the first HTML data based on the at least part of the first output object tree if receiving a second input for storing the web page in the non-volatile storage device from the input circuitry, and store the second HTML data in the non-volatile storage device.

2. The electronic device of claim 1, wherein the instructions, when executed by the processor cause the processor to:
receive a third input from the input circuitry, the third input for reproducing the stored second HTML data from the non-volatile storage device;
parse the second HTML data and temporarily store the parsed second HTML data in the volatile memory;
generate a second output object tree based on at least part of the parsed or stored second HTML data; and
display the web page on the user interface based on at least part of the second output object tree.

3. An electronic device, comprising:
a communication circuit configured to receive a web page;
a display configured to output the received web page; and
a processor electronically connected with the communication circuit and the display,
wherein the processor is configured to:
extract output objects corresponding to a selected area in response to receiving an input signal for selecting the at least part of the entire area of the web page;
generate a reconstructed web page based on the collected output objects; and
store the generated reconstructed web page.

4. The electronic device of claim 3, wherein the processor is configured to:
generate a document object module (DOM) tree from HTML data of the web page;
generate an output object tree of objects output on the display based on the DOM tree;
generate HTML data for objects corresponding to the selected area from the output object tree; and
store the generated HTML data.

5. The electronic device of claim 3, wherein the processor is configured to:
collect display information of objects which are currently being displayed on the display among the output objects; and
generate and store an HTML reconstructed web page using output objects of the selected area based on the display information.

6. The electronic device of claim 3, wherein the processor is configured to:
receive an input on an area from the display;
collect an output object, at least part of which is included in at least partial area drawn by the input, and display information of the output object; and
generate and store an HTML reconstructed web page using the output objects based on the output object and the display information.

7. The electronic device of claim 3, wherein the processor is configured to:
receive a screen capture input;
collect an output object displayed on at least part of the display and display information of the output object; and
generate and store an HTML reconstructed web page using the output objects based on the output object and the display information.

8. The electronic device of claim 3, wherein the processor is configured to:
generate a DOM tree from an HTML data of the web page;
generate an output object tree of objects to be output on the display based on the DOM tree;
collect part of at least one output object corresponding to the at least part of the entire area in the output object tree;
encode the collected part of the at least one output object;
change the encoded data to scalable vector graphics (SVG) format data; and
generate and store an HTML reconstructed web page based on the changed SVG format data.

9. The electronic device of claim 3, wherein the processor is configured to:
remove a specified blank or any blank included in the reconstructed web page or to adjust a size of each of the output objects in response to attributes of the display.

10. The electronic device of claim 3, wherein the processor is configured to adjust a size of each of the output objects in response to attributes of the display.

11. The electronic device of claim 3, wherein the processor is configured to:
output the reconstructed web page on the display based on a document form, if an input associated with outputting the stored reconstructed web page is received.

12. The electronic device of claim 3, wherein the processor is configured to:
detect a reconstructed web page including information corresponding to a received keyword, if the keyword is received; and
output the detected reconstructed web page.

13. The electronic device of claim 12, wherein the processor is configured to:
detect text corresponding to the keyword among text included in the reconstructed web page; and
output text including the keyword.

14. The electronic device of claim 3, wherein the processor is configured to:
change a link path of contents information corresponding to link information included in the output objects to a path of a memory which stores the contents information; and
apply the changed path information to link information of the reconstructed web page.

15. The electronic device of claim 3, wherein the processor is configured to:
change name or title information of link information included in the output objects to a predetermined size.
